(19) Europäisches Patentamt
European Patent Office
Office européen des brevets

(11) **EP 4 539 459 A1**

(12) **EUROPEAN PATENT APPLICATION**
published in accordance with Art. 153(4) EPC

(43) Date of publication:
**16.04.2025 Bulletin 2025/16**

(21) Application number: **23819101.9**

(22) Date of filing: **06.06.2023**

(51) International Patent Classification (IPC):
**H04N 19/146** *(2014.01)*

(86) International application number:
**PCT/CN2023/098534**

(87) International publication number:
**WO 2023/236936 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.06.2022 CN 202210631100**

(71) Applicant: **Hangzhou Hikvision Digital
Technology Co., Ltd.
Hangzhou, Zhejiang 310051 (CN)**

(72) Inventors:
• **PAN, Dongping
Hangzhou, Zhejiang 310051 (CN)**
• **SUN, Yucheng
Hangzhou, Zhejiang 310051 (CN)**
• **CHEN, Fangdong
Hangzhou, Zhejiang 310051 (CN)**
• **WEI, Liang
Hangzhou, Zhejiang 310051 (CN)**

(74) Representative: **Goddar, Heinz J.
Boehmert & Boehmert
Anwaltspartnerschaft mbB
Pettenkoferstrasse 22
80336 München (DE)**

(54) **IMAGE ENCODING METHOD AND APPARATUS, AND IMAGE DECODING METHOD AND APPARATUS**

(57) The present application relates to the field of video encoding and decoding. Provided are an image encoding method and apparatus, and an image decoding method and apparatus, which can be used for avoiding the overflow of a code stream. The image decoding method specifically comprises: on the basis of a code stream of a block to be decoded, determining whether an image block corresponding to the block to be decoded uses a fallback mode, wherein the code length of the block to be decoded of the image block is less than or equal to the maximum code length of the block to be decoded, the maximum code length being the maximum code stream length which is allowed to be cached in a code stream buffer; when the image block corresponding to the block to be decoded uses the fallback mode, acquiring a first fixed code length, wherein the first fixed code length is the code length of a sub-block to be decoded, and the block to be decoded comprises one or more sub-blocks to be decoded; and parsing the code stream on the basis of the first fixed code length, so as to decode the block to be decoded.

```
┌──────────────────────────────────────────────┐
│ Decoding end determines whether a fallback    │
│ mode is adopted for an image block            │───  S301
│ corresponding to a block to be decoded based  │
│ on a code stream of the block to be decoded   │
└──────────────────────────────────────────────┘
                      │
                      ▼
┌──────────────────────────────────────────────┐
│ When the fallback mode is adopted for the     │
│ image block corresponding to the block to be  │───  S302
│ decoded, the decoding end obtains a           │
│ first fixed code length                       │
└──────────────────────────────────────────────┘
                      │
                      ▼
┌──────────────────────────────────────────────┐
│ Decoding end parses the code stream of the    │
│ block to be decoded based on the first fixed  │───  S303
│ code length to decode the block to be         │
│ decoded                                        │
└──────────────────────────────────────────────┘
```

FIG. 10

EP 4 539 459 A1

**Description**

**TECHNICAL FIELD**

The present disclosure relates to the field of video encoding and decoding, and in particular to image encoding methods and apparatuses, and image decoding methods and apparatuses.

**BACKGROUND**

Video encoding technology, also known as video compression technology, is used to reduce a data bandwidth of video signals. A video is a continuous sequence of images and consists of successive image frames. Due to a visual persistence effect of human eyes, when a frame sequence is played at a certain rate, what human eyes can see is a continuous video. Encoding and decoding a video means encoding and decoding each frame of image in the video. Taking a frame of image as an example, at an encoding end, an image encoder encodes the image to obtain a code stream corresponding to the image and transmits the code stream to a decoding end. At the decoding end, an image decoder parses the code stream to reconstruct the image.

In the process of image encoding and decoding, in order to improve compression efficiency, the common video compression technology adopts variable length coding. In variable length coding, a code stream obtained after compression encoding of a video sequence is variable rate, which is not suitable for real time transmission in a channel with a fixed code rate. Therefore, variable code rate data generated by an encoder is generally first output to a buffer with a certain storage space, and then output from the buffer at a fixed code rate. The size of the storage space of the buffer is fixed. If code stream data input to the buffer is too large, causing data that needs to be temporarily stored in the buffer to exceed the size of the storage space of the buffer, the code stream will "overflow", which will lead to the loss of subsequent image information. In addition, if the code stream data input to the buffer is too small, resulting in data temporarily stored in the buffer "insufficient" and unable to meet a fixed output code rate of the buffer, the code stream will "underflow".

Therefore, how to avoid "overflow" or "underflow" of the code stream in the image encoding and decoding process is an urgent problem to be solved.

**SUMMARY**

The embodiment of the present disclosure provides image encoding methods and apparatuses, and image decoding methods and apparatuses, which can be used for avoiding code stream overflow.

To achieve the above purpose, the embodiments of the present disclosure adopt the following technical solution.

In a first aspect, the embodiments of the present disclosure provide an image decoding method, which is performed by a decoding end. The method includes: determining whether a fallback mode is adopted for an image block corresponding to a block to be decoded based on a code stream of the block to be decoded, where a code length of the block to be decoded is less than or equal to a maximum code length of the block to be decoded, where the maximum code length is a maximum code stream length allowed to be cached in a code stream buffer; in response to the fallback mode being adopted for the image block corresponding to the block to be decoded, obtaining a first fixed code length, where the first fixed code length is a code length of a sub-block to be decoded, and the block to be decoded includes one or more sub-blocks to be decoded; and parsing the code stream based on the first fixed code length to decode the block to be decoded.

In a second aspect, the embodiments of the present disclosure provide an image encoding method, which is performed by an encoding end. The method includes: obtaining a maximum code length of a block to be encoded, where the maximum code length is a maximum code stream length allowed to be cached in a code stream buffer; pre-coding the block to be encoded based on a first mode to obtain a first code length of the block to be encoded, where the first mode is one of a plurality of prediction modes at the encoding end, and the first code length is a length of a code stream obtained after encoding the block to be encoded; and in response to the first code length being greater than or equal to the maximum code length, adopting a fallback mode to encode the block to be encoded, where a code length obtained by encoding the block to be encoded based on the fallback mode is less than or equal to the maximum code length.

In a third aspect, the embodiments of the present disclosure provide an image decoding method, which is performed by a decoding end. The method includes: determining whether a fallback mode is adopted for an image block corresponding to a block to be decoded during encoding based on a code stream of the block to be decoded, where a code length obtained by encoding the image block based on the fallback mode is greater than or equal to a minimum code length of the block to be decoded, where the minimum code length is a minimum code stream length allowed to be cached in a code stream buffer; in response to the fallback mode being adopted for the image block corresponding to the block to be decoded during encoding, obtaining a first fixed code length based on the code stream, where the first fixed code length is a code length of a sub-block to be decoded, and the block to be decoded includes one or more sub-blocks to be decoded; and parsing the code stream based on the first fixed code length to decode the block to be decoded.

In a fourth aspect, the embodiments of the present disclosure provide an image encoding method, which is performed by an encoding end. The method includes: obtaining a minimum code length of a block to be encoded, where the minimum code length is a minimum code stream length allowed to be cached in a code stream buffer; pre-coding the block to be encoded based on a first mode to obtain a first code length of the block to be encoded, where the first mode is one of a plurality of prediction modes at the encoding end, and the first code length is a length of a code stream obtained after encoding the block to be encoded; and in response to the first code length being less than or equal to the minimum code length, adopting a fallback mode to encode the block to be encoded, where a code length obtained by encoding the block to be encoded based on the fallback mode is greater than or equal to the minimum code length.

In a fifth aspect, the embodiments of the present disclosure provide an image decoding method, which is performed by a decoding end. The method includes: parsing a code stream of a block to be decoded, and determining whether to adopt skip residual mode; determining a second mode of the block to be decoded in response to the skip residual mode being adopted, where the second mode is one of a plurality of prediction modes at the decoding end; determining a prediction value of the block to be decoded based on the second mode; and determine the prediction value of the block to be decoded as a reconstructed value of the block to be decoded.

In a sixth aspect, the embodiments of the present disclosure provide an image encoding method, which is performed by an encoding end. The method includes: obtaining a maximum code length of a block to be encoded, where the maximum code length is a maximum code stream length allowed to be cached in a code stream buffer; pre-coding the block to be encoded based on a first mode to obtain a first code length of the block to be encoded, where the first mode is one of a plurality of prediction modes at the encoding end, and the first code length is a length of a code stream obtained after encoding the block to be encoded; adopting a second mode to encode the block to be encoded based on a skip residual mode in response to the first code length being greater than or equal to the maximum code length, where a code length obtained by adopting the second mode to encode the block to be encoded based on the skip residual mode is less than or equal to the maximum code length, and the second mode is one of the plurality of prediction modes at the encoding end.

In a seventh aspect, the present disclosure provides an image decoding apparatus. The decoding apparatus can be a video decoder or a device that includes a video decoder. The decoding apparatus includes various modules for implementing the decoding method in any one of the first aspect, the third aspect, or the fifth aspect. The decoding apparatus can implement the operations in the relevant method examples mentioned above. The operations can be implemented through hardware or by executing corresponding software through hardware. The hardware or software includes one or more modules corresponding to the above operations.

In an eighth aspect, the present disclosure provides an image encoding apparatus. The encoding apparatus can be a video encoder or a device that includes a video encoder. The encoding apparatus includes various modules for implementing the encoding method in any one of the second aspect, the fourth aspect, or the sixth aspect. The encoding apparatus can implement the operations in the relevant method examples mentioned above. The operation can be implemented through hardware or by executing corresponding software through hardware. The hardware or software includes one or more modules corresponding to the above operations.

In a ninth aspect, the present disclosure provides an electronic device, including one or more processors and a memory, the memory is used to store computer instructions, and the one or more processors are used to call the computer instructions from the memory and run the computer instructions to implement the method described in any one of the first to sixth aspects. For example, the electronic device may refer to a video encoder, or a device that includes a video encoder. For another example, the electronic device may refer to a video decoder, or a device that includes a video decoder.

In a tenth aspect, the present disclosure provides a computer-readable storage medium storing a computer program or instructions. When the computer program or instructions are executed by a computing device or a processor, the method described in any one of the first to sixth aspects can be implemented.

In an eleventh aspect, the present disclosure provides a computer program product including instructions that, when run on a computing device or a processor, cause the computing device or the processor to execute the instructions to implement any one of the methods described in the first to sixth aspects.

In a twelfth aspect, the present disclosure provides a chip, including a memory and a processor. The memory is used to store computer instructions, and the processor is used to call the computer instructions from the memory and run the computer instructions to implement the method described in any one of the first to sixth aspects.

In a thirteenth aspect, the present disclosure provides an image coding system including an encoding end and a decoding end. The decoding end is used to implement the corresponding decoding method provided in the first, third, or fifth aspect, and the encoding end is used to implement the corresponding encoding method.

On the basis of the implementations provided in the above aspects of the present disclosure, further combinations can be made to provide more implementations. In other words, any possible implementation in any of the above aspects can be applied to other aspects without conflict, thus obtaining new embodiments. For example, any of the image decoding methods provided in the first, third, and fifth aspects above can be combined pairwise or in combination of three aspects without conflict, so that a new image decoding method can be obtained.

According to the image encoding/decoding methods and apparatuses proposed in the present disclosure, when it is determined that there will be code stream overflow, the code stream overflow can be avoided by encoding the block to be encoded in the fallback mode, thereby avoiding the loss of image information of the block to be encoded.

## BRIEF DESCRIPTION OF THE DRAWINGS

FIG. 1 is a schematic diagram of an architecture of an encoding and decoding system 1 applied in an embodiment of the present disclosure;
FIG. 2 is a schematic block diagram of an example of an encoder 100 for implementing a method according to an embodiment of the present disclosure;
FIG. 3 is a schematic diagram of a corresponding relationship among an image, a parallel encoding unit, an independent encoding unit, and an encoding unit provided in an embodiment of the present disclosure;
FIG. 4 is a schematic block diagram of an example of a decoder 200 for implementing a method according to an embodiment of the present disclosure;
FIG. 5 is a flowchart of an image encoding method provided in an embodiment of the present disclosure;
FIG. 6 is a schematic diagram of a sub-block to be encoded provided in an embodiment of the present disclosure;
FIG. 7 is a flowchart of another image encoding method provided in an embodiment of the present disclosure;
FIG. 8 is a schematic diagram of a block to be encoded provided in an embodiment of the present disclosure;
FIG. 9 is a schematic diagram of another block to be encoded provided in an embodiment of the present disclosure;
FIG. 10 is a flowchart of an image decoding method provided in an embodiment of the present disclosure;
FIG. 11 is a logical flowchart of an image decoding method provided in an embodiment of the present disclosure;
FIG. 12 is a flowchart of an image encoding method provided in an embodiment of the present disclosure;
FIG. 13 is a flowchart of another image decoding method provided in an embodiment of the present disclosure;
FIG. 14 is a flowchart of another image encoding method provided in an embodiment of the present disclosure;
FIG. 15 is a flowchart of another image decoding method provided in an embodiment of the present disclosure;
FIG. 16 is a schematic structural diagram of an encoding apparatus 1600 provided in an embodiment of the present disclosure;
FIG. 17 is a schematic structural diagram of a decoding apparatus 1700 provided in an embodiment of the present disclosure;
FIG. 18 is a schematic structural diagram of another encoding apparatus 1800 provided in an embodiment of the present disclosure;
FIG. 19 is a schematic structural diagram of another decoding apparatus 1900 provided in an embodiment of the present disclosure;
FIG. 20 is a schematic structural diagram of another encoding apparatus 2000 provided in an embodiment of the present disclosure;
FIG. 21 is a schematic structural diagram of another decoding apparatus 2100 provided in an embodiment of the present disclosure;
FIG. 22 is a schematic structural diagram of an electronic device 2200 provided in an embodiment of the present disclosure.

## DETAILED DESCRIPTION OF THE EMBODIMENTS

The technical solution in the embodiments of the present disclosure will be described clearly and completely in combination with accompanying drawings in the embodiments of the present disclosure. Obviously, the described embodiments are only a part of the embodiments of the present disclosure, not all of them. Based on the embodiments in the present disclosure, all other embodiments obtained by ordinary technical personnel in this field without creative labor fall within the protection scope of the present disclosure.

In the description of the present disclosure, "/" means "or" unless otherwise specified. For example, A/B can represent A or B. The term "and/or" herein aims to describe an association relationship of related objects, indicating that there can be three kinds of relationships. For example, A and/or B, which can represent three cases: A exists alone, A and B exist at the same time, and B exists alone. In addition, "at least one" refers to one or more, and "a plurality of" refers to two or more. The words "first" and "second" do not limit the quantity or execution order, and the words "first" and "second" do not limit being necessarily different.

It to be noted that in the present disclosure, the term "exemplary" or "for example" is used to represent an example, an illustration, or a description. Any embodiment or solution described as an "exemplary" or "for example" in the present disclosure should not be interpreted as being more preferred or having more advantages than other embodiment or solution. Exactly, use of the term "exemplary" or "for example" or the like is intended to present a relative concept in a specific manner.

The following describes a system architecture applied in the embodiments of the present disclosure.

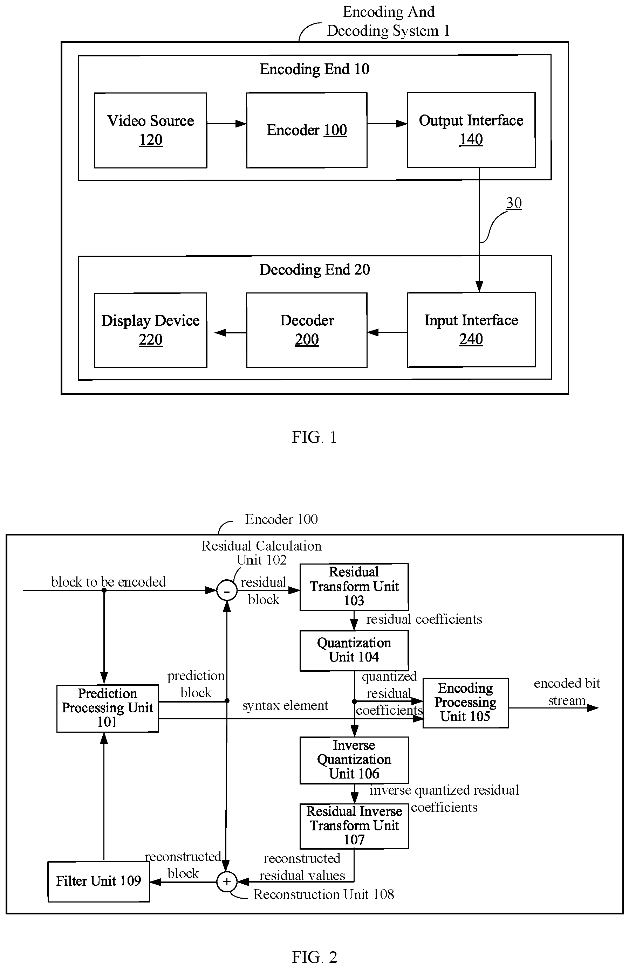

Referring to FIG. 1, FIG. 1 shows a schematic diagram of an architecture of an encoding and decoding system 1 applied in an embodiment of the present disclosure. As shown in FIG. 1, the encoding and decoding system 1 can include an encoding end 10 and a decoding end 20. The encoding end 10 generates encoded video data. Therefore, the encoding end 10 can be referred to as a video encoding apparatus. The decoding end 20 can decode the encoded video data generated by the encoding end 10. Therefore, the decoding end 20 can be referred to as a video decoding apparatus.

The encoding end 10 and the decoding end 20 can be in a variety of devices, including desktop computers, mobile computing devices, notebook computers (e.g., laptop computers), tablet computers, set-top boxes, telephone handheld devices such as "smart" phones, televisions, cameras, display devices, digital media players, video game consoles, vehicle-mounted computers or the like.

In an example, the encoding end 10 and the decoding end 20 in FIG. 1 can be two separate devices. Or, the encoding end 10 and the decoding end 20 can be the same device, that is, the encoding end 10 or its corresponding functions and the decoding end 20 or its corresponding functions can be integrated on the same device.

Communication can be performed between the encoding end 10 and the decoding end 20. For example, the decoding end 20 can receive encoded video data from the encoding end 10 via a link 30. The link 30 can include one or more media or devices capable of transmitting the encoded video data from the encoding end 10 to the decoding end 20. In an example, the link 30 can include one or more communication media that enable the encoding end 10 to directly transmit the encoded video data to the decoding end 20 in real time. In this example, the encoding end 10 can modulate the encoded video data according to a communication standard (such as a wireless communication protocol), and can transmit the modulated video data to the decoding end 20. The one or more communication media may include wireless and/or wired communication media, such as radio frequency (RF) spectrum or one or more physical transmission lines. The one or more communication media may form a part of a packet-based network, which may be, for example, a local area network, a wide area network, or a global network (for example, the Internet). The one or more communication media may include routers, switches, base stations, or other devices that facilitate communication from the encoding end 10 to the decoding end 20.

In an example, the encoding end 10 can output the encoded video data from an output interface 140 to a built-in or external storage device. The storage device may include any of a variety of distributed or locally accessed data storage media, such as hard disk drives, Blu-ray discs, digital video discs (DVD), compact disc read-only memories (CD-ROMs), flash memories, volatile or non-volatile memories, or any other suitable digital storage media for storing the encoded video data.

As shown in FIG. 1, the encoding end 10 includes a video source 120, an encoder 100, and an output interface 140. In some examples, the output interface 140 may include a modulator/demodulator (modem) and/or a transmitter. The video source 120 may include one or more video capture devices (for example, cameras), video archives containing previously captured video data, one or more video feed interfaces for receiving video data from video content providers, and/or one or more computer graphics systems for generating video data, or any combination of the above sources of video data. The encoder 100 can encode video data from the video source 120. In some examples, the encoding end 10 directly transmits the encoded video data to the decoding end 20 via the output interface 140. In other examples, the encoded video data can also be stored on a storage device for later access by the decoding end 20 for decoding and/or playing.

As shown in FIG. 1, the decoding end 20 includes an input interface 240, a decoder 200, and a display device 220. In some examples, the input interface 240 includes a receiver and/or a modem. The input interface 240 can receive the encoded video data via the link 30 and/or from the storage device. The display device 220 can be integrated with the decoding end 20 or can be external to the decoding end 20. Generally, the display device 220 displays decoded video data. The display device 220 may include various display devices, such as a liquid crystal display (LCD), a plasma display, an organic light-emitting diode (OLED) display, or other types of display devices.

In an example, a code stream buffer (not shown in FIG. 1) can also be included in the encoding end 10. The code stream buffer is used to receive encoded code stream data and output code stream data with a fixed code rate. The size of the code stream data generated by encoding different blocks to be encoded can vary greatly based on properties of the blocks to be encoded. Therefore, a code stream obtained after compression encoding of a video sequence is variable rate, which is not suitable for real time transmission in a channel with a fixed code rate. The rate variation in compressed video can be smoothed through a code stream buffer. The larger a storage space of the code stream buffer, the more it can withstand fluctuations in the code rate.

In an example, another buffer can also be included in the decoding end 20. The buffer can be used to receive code stream data with a fixed code rate and output it from the buffer to a code stream parsing unit 201 of the decoder 200.

In an example of the present disclosure, the encoding end and the decoding end can always record a state of the code stream buffer during the whole encoding/decoding process, so both the encoding end and the decoding end can obtain a maximum code stream length allowed to be cached by the code stream buffer when encoding/decoding an image block. For the above process of recording the state of the code stream buffer at the encoding end and the decoding end, in an example, when only the encoding end includes the code stream buffer, the encoding end and the decoding end can always record the state of the code stream buffer at the encoding end. When only the decoding end includes the code stream buffer, the above situation of the code stream buffer at the encoding end can be referred to. When both the encoding end and the decoding end include code stream buffers, the encoding end and the decoding end can simultaneously record the state of the code stream buffer at the encoding end, or simultaneously record the state of the code stream buffer at the decoding end, or respectively record states of their respective stream buffers, or respectively record states of each other's code stream buffers, or simultaneously record states of the two stream buffers. The present disclosure does not limit the process of recording the state of the code stream buffer mentioned above, as long as the encoding end and the decoding end can obtain maximum code stream lengths allowed to be cached by code stream buffers of the encoding end and/or the decoding end when encoding/decoding an image block.

Although not shown in FIG. 1, in some aspects, the encoder 100 and the decoder 200 can be integrated with an audio encoder and an audio decoder, respectively, and can include appropriate multiplexer-demultiplexer units or other hardware and software to handle the encoding of both audio and video in a common data stream or separate data streams.

It should be understood that the encoding and decoding system 1 shown in FIG. 1 is only an example, and the technology of the present disclosure is applicable to video coding settings (for example, video encoding or video decoding) that do not necessarily include any data communication between the encoding apparatus and the decoding apparatus. In other examples, data is retrieved from a local memory, streamed over the network, and so on. The video encoding apparatus can encode data and store the data in the memory, and/or the video decoding apparatus can retrieve data from the memory and decode the data. In many examples, encoding and/or decoding can be performed by devices that do not communicate with each other but only encode data to a memory and/or retrieve data from the memory and decode the data.

Specific structures of the encoder 100 and the decoder 200 in FIG. 1 will be briefly introduced with reference to the accompanying drawings.

Referring to FIG. 2, which shows a schematic block diagram of an example of an encoder 100 for implementing a method in an embodiment of the present disclosure. As shown in FIG. 2, the encoder 100 includes a prediction processing unit 101, a residual calculation unit 102, a residual transform unit 103, a quantization unit 104, an encoding processing unit 105, an inverse quantization unit 106, a residual inverse transform unit 107, a reconstruction unit 108, and a filter unit 109.

In an example, the input of the encoder 100 is an image block (for example, a block to be encoded or an encoding unit) of an image to be encoded.

In another example, if the input of the encoder 100 is an image to be encoded, the encoder 100 can further include a dividing unit (not shown in FIG. 2) for dividing the image to be encoded into a plurality of image blocks. The encoder 100 is used to encode the plurality of image blocks of the image to be encoded block by block, thereby completing the encoding of the image to be encoded. For example, the encoder 100 performs the encoding process on each image block, thereby completing the encoding of the image to be encoded.

In an example, a method of dividing an image to be encoded into a plurality of image blocks may include steps 11 to 13.

In step 11, a frame of image is divided into one or more non-overlapping parallel encoding units. There is no dependency among the parallel encoding units, and parallel/independent encoding and decoding can be performed.

In step 12, for each parallel encoding unit, the encoding end can divide it into one or more independent encoding units that do not overlap with each other. The independent encoding units can be independent of each other, but they can share some header information of the parallel encoding unit.

In step 13, for each independent encoding unit, the encoding end can further divide it into one or more non-overlapping encoding units. If the independent encoding unit is divided into a plurality of non-overlapping encoding units, the division method can be horizontal equal division, vertical equal division, or horizontal vertical equal division. The specific implementation is not limited to this. The encoding units in an independent encoding unit can depend on each other, meaning they can refer to each other during the prediction process.

A width of the encoding unit is w_cu and a height is h-cu. In an example, the width of the encoding unit is greater than its height (except for certain edge areas, the width may not be greater than the height). Generally, the encoding unit can be fixed w_cu × h-cu, where both w_cu and h-cu are 2 to the Nth power (N is greater than or equal to 0), for example, 16 × 4, 8 × 4, 16 × 2, 8 × 2, 4 × 2, 8 × 1, 4 × 1, etc.

The encoding unit can include three components: luma Y, chroma Cb, and chroma Cr (or three components: red R, green G, and blue B, or three components: luma Y, chroma U, and chroma V), or only one of the three components. If the encoding unit includes the three components, dimensions of the three components can be exactly the same or different, depending on an input format of the image.

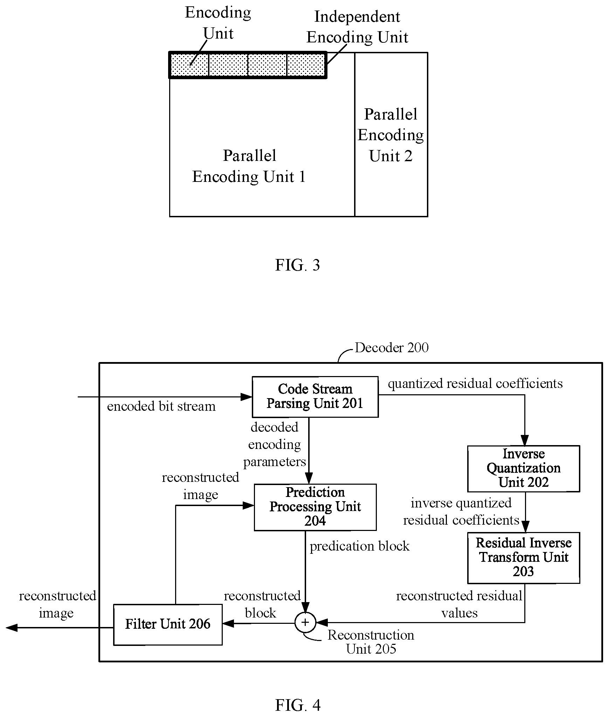

As shown in FIG. 3, it is a schematic diagram of a corresponding relationship among an image, a parallel encoding unit, an independent encoding unit, and an encoding unit. In FIG. 3, an image being divided into a parallel encoding unit 1 and a parallel encoding unit 2 in a ratio of 3:1, and an independent encoding unit including four encoding units is used as an example for explanation.

In an example, the dividing unit divides the image to be encoded into a plurality of image blocks, which can be further divided into smaller blocks, such as image blocks based on a quadtree structure or a binary tree structure. In addition, the dividing can also include dividing into slices, tiles, or other relatively large units. A strip can be divided into a plurality of image blocks (or possibly into a set of image blocks called tiles).

The prediction processing unit 101 is used to receive or obtain an original value of the block to be encoded and reconstructed image data, predict the block to be encoded based on related data in the reconstructed image data, and obtain a prediction block of the block to be encoded.

In an example, the prediction processing unit 101 may include an inter predictor and an intra predictor. The inter predictor can be used to determine an inter prediction mode for encoding the block to be encoded, and based on the determined inter prediction mode, predict motion information (e.g., motion vectors (MVs)) of one or more sub-blocks in the current image block, and use the motion information k (e.g., motion vectors) of the one or more sub-blocks in the current image block to obtain or generate a prediction block of the current image block. The intra predictor can determine an intra prediction mode for encoding the block to be encoded.

The intra prediction refers to using the spatial correlation of a video and one or more coded blocks (CBs) of the current block for prediction, so as to achieve the purpose of reducing video spatial redundancy. For example, intra prediction specifies a plurality of prediction modes, and each prediction mode corresponds to a texture direction (except for a DC mode). For example, if an image texture presents a horizontal arrangement, a horizontal prediction mode can better predict image information.

The inter prediction refers to using pixels of one or more adjacent encoded images to predict pixels of the current image based on the temporal correlation of the video. Due to the strong temporal correlation contained in the video sequence, the temporal redundancy of the video can be effectively reduced. The inter prediction part of the video encoding standard adopts block-based motion compensation technology. The main principle is to find the best matching block for each pixel block of the current image in a previously encoded image. This process is called motion estimation (ME).

In addition, in the inter prediction mode, motion vectors can be used to represent a relative displacement between the current encoding block and the best matching block in its reference image. Each divided block has a corresponding motion vector transmitted to the decoding end. If the motion vector of each block is independently encoded and transmitted, especially when divided into small-sized blocks, it needs to consume quite a lot of bits. In order to reduce the number of bits used for encoding motion vectors, the spatial correlation between neighboring image blocks is used to predict the motion vector of the current block to be encoded based on motion vectors of neighboring encoded blocks, and then a prediction difference is encoded. In this way, the number of bits representing motion vectors can be effectively reduced. In the process of encoding the motion vector of the current block, the motion vector of the current block is first predicted using the motion vectors of neighboring encoded blocks. Then, a difference (motion vector difference (MVD)) between a prediction value of the motion vector (motion vector prediction (MVP)) and a true estimated value of the motion vector (MVD) is encoded, effectively reducing the number of bits for encoding the MVs.

The residual calculation unit 102 is used to calculate residual values between the original value of the block to be encoded and the prediction block of the block to be encoded to obtain a residual block. For example, a pixel value of the prediction block is subtracted from an original pixel value of the block to be encoded pixel by pixel.

In an example, the residual transform unit 103 is used to determine residual coefficients based on the residual block. In an example, in this process, the residual block can be transformed, such as discrete cosine transform (DCT) or discrete sine transform (DST), to obtain transform coefficients in a transform domain. The transform coefficients can also be called transform residual coefficients or residual coefficients, which can represent the residual block in the transform domain. The step of residual transform may not be included in the process of encoding the block to be encoded by the encoder 100.

The quantization unit 104 is used to quantize the transform coefficients or the residual values by applying scalar quantization or vector quantization to obtain quantized residual coefficients (or quantized residual values). The quantization process can reduce a bit depth related to some or all residual coefficients. For example, a p-bit transform coefficient can be rounded down to a q-bit transform coefficient during quantization, where p is greater than q. The degree of quantization can be modified by adjusting a quantization parameter (QP). For example, for scalar quantization, different scales can be applied to achieve finer or coarser quantization. A smaller quantization step corresponds to a finer quantization, and a larger quantization step corresponds to a coarser quantization. An appropriate quantization step can be indicated by the QP.

In the process of image encoding, in order to achieve compression of the image, the residual block of the block to be encoded is usually quantized, or a residual coefficient block obtained by certain processing of the residual block is quantized, so that the quantized residual block or residual coefficient block can be encoded with fewer bits. It can be understood that the residual block is a residual value block obtained based on an original pixel block and a prediction block of the block to be encoded, and the residual coefficient block is a coefficient block obtained by processing and transforming the residual block.

In an example, taking the quantization of the residual block by the encoder 100 as an example, the encoder 100 can divide each residual value in the residual block of the block to be encoded by a quantization coefficient to reduce the residual value in the residual block. In this way, compared to residual values that are not quantized, residual values that are reduced after quantization can be encoded by fewer bits, achieving image compression encoding.

The encoding processing unit 105 is used to encode the above quantized residual coefficients (or quantized residual values), and output encoded image data (for example, an encoding result of the current block to be encoded) in a form of an encoded bit stream (or referred to as a code stream). Then the encoded bit stream can be transmitted to the decoder, or stored first and subsequently transmitted to the decoder or used for retrieval. The encoding processing unit 105 can also be used to encode syntax elements of the block to be encoded, such as encoding the prediction mode adopted by the block to be encoded into the code stream.

In an example, the encoding processing unit 105 encodes the residual coefficients, and a feasible method is semi-fixed length encoding. Firstly, a maximum absolute value of residuals in a residual block (RB) is defined as modified maximum (mm). The numbers of bits for encoding residual coefficients in the RB are determined (the number of bits for encoding residual coefficients in the same RB are the same). For example, if a fixed coding length (CL) of the current RB is 2 and the current residual coefficient is 1, then encoding the residual coefficient 1 requires 2 bits, represented as 01. If the CL of the current RB is 7, the range of residuals that can be represented is $[-2^6, 2^6-1]$ or $[-2^6+1, 2^6]$. The determination of CL is to find a minimum M value that satisfies that all residuals of the current sub-block are within the range of $[-2^{(M-1)}, 2^{(M-1)}]$. If there are two boundary values $-2^{(M-1)}$ and $2^{(M-1)}$ within this range, the value M corresponding to the CL should be increased by 1, that is, M+1 bits are needed to encode all the residuals of the current RB. If there is only one of the boundary values $-2^{(M-1)}$ and $2^{(M-1)}$, a Trailing bit also needs to be encoded to determine whether the boundary value is $-2^{(M-1)}$ or $2^{(M-1)}$. If neither $-2^{(M-1)}$ nor $2^{(M-1)}$ is present in all residuals, there is no need to encode the Trailing bit.

Other residual coefficient encoding methods can also be adopted, for example, exponential Golomb encoding method, Golomb Rice encoding method, truncated unary code encoding method, run length encoding method, direct encoding of original residual values, etc.

In addition, for certain special cases, original values can also be directly encoded instead of residual values.

The inverse quantization unit 106 is used to inverse quantize the above quantized residual coefficients (or the quantized residual values) to obtain inverse quantized residual coefficients (or quantized residual values). The inverse quantization is an inverse application of the quantization unit 104. For example, based on or using the same quantization step as the quantization unit 104, an inverse quantization scheme corresponding to the quantization scheme applied by the quantization unit 104 is applied.

The residual inverse transform unit 107 is used to inverse transform the above inverse quantized residual coefficients to obtain a reconstructed residual block. In an example, the inverse transform can include inverse discrete cosine transform (IDC) or inverse discrete sine transform (IDST). In this way, inverse transform values obtained by inverse transforming the above inverse quantized residual coefficients are residual values reconstructed in a pixel domain (or referred to as a sample domain). That is, the inverse quantized residual coefficient block is inverse transformed by the residual inverse transform unit 107 to obtain the reconstructed residual block. When the residual transform unit 103 mentioned above is not included in the encoder 100, the encoder 100 may not include the inverse transform step.

The reconstruction unit 108 is used to add the reconstructed residual block to the prediction block to obtain a reconstructed block in the sample domain. The reconstruction unit 108 can be a summer. For example, the reconstruction unit 108 adds the residual values in the reconstructed residual block to prediction values of corresponding pixels in the prediction block to obtain reconstructed values of the corresponding pixels. The reconstructed block output by the reconstruction unit 108 can be used to predict other image blocks to be encoded in subsequent steps.

The filter unit 109 (or "filter" for short) is used to filter the reconstructed block to obtain a filtered block, thereby smoothly performing pixel transform or improving image quality.

In an example, an encoding process implemented by the encoder 100 can include steps 21 to 25.

In step 21, the prediction processing unit 101 determines a prediction mode, and predicts a block to be encoded based on the determined prediction mode and a reconstructed block of an encoded image block to obtain a prediction block of the block to be encoded.

The reconstructed block of the encoded image block is obtained by sequentially processing a quantized residual coefficient block of the encoded image block by the inverse quantization unit 106, the residual inverse transform unit 107, and the reconstruction unit 108.

In step 22, the residual calculation unit 102 obtains a residual block of the block to be encoded based on the prediction block and original pixel values of the block to be encoded.

In step 23, the residual transform unit 103 transforms the residual block to obtain a residual coefficient block.

In step 24, the quantization unit 104 quantizes the residual coefficient block to obtain the quantized residual coefficient block.

In step 25, the encoding processing unit 105 encodes the quantized residual coefficient block and encodes related syntax elements (for example, prediction mode, encoding mode, etc.) to obtain a code stream of the block to be encoded.

Referring to FIG. 4, a schematic block diagram of an example of a decoder 200 for implementing a method according to an embodiment of the present disclosure is shown. The decoder 200 is used to receive image data encoded by the encoder 100 (an encoded bit stream, e.g., an encoded bit stream including an image block and associated syntax elements), for example, to obtain a decoded image block.

As shown in FIG. 4, the decoder 200 includes a code stream parsing unit 201, an inverse quantization unit 202, a residual inverse transform unit 203, a prediction processing unit 204, a reconstruction unit 205, and a filter unit 206. In some examples, the decoder 200 can perform a decoding process that is substantially inverse to the encoding process described by the encoder 100 in FIG. 2.

The code stream parsing unit 201 is used to decode the encoded bit stream to obtain quantized residual coefficients (or quantized residual values) and/or decoding parameters (decoded encoding parameters, for example, the decoding parameters may include any one or more of inter prediction parameters, intra prediction parameters, filter parameters, and/or other syntax elements executed by the encoding end). The code stream parsing unit 201 is also used to forward the decoding parameters to the prediction processing unit 204, so that the prediction processing unit 204 can perform the prediction process based on the decoding parameters.

The function of the inverse quantization unit 202 can be the same as that of the inverse quantization unit 106 of the encoder 100, used for inverse quantization of the quantized residual coefficients or quantized residual values decoded and output by the code stream parsing unit 201.

The inverse quantization is an inverse process of quantization. The inverse quantization refers to mapping quantized values (for example, coefficients or residual values) into a reconstructed signal in an input signal space. The reconstructed signal is an approximation of an input signal. To reconstruct an image block from a compression encoded code stream, the inverse quantization unit 202 of the decoder 200 can perform inverse quantization on a quantized residual block or a residual coefficient block parsed from the code stream, so that an unquantized residual block or residual coefficient block corresponding to the image block can be reconstructed. Then, the decoder 200 reconstructs the image block based on the reconstructed residual block or residual coefficient block to obtain a reconstructed block of the image.

As an example, taking the decoder 200 parsing the residual block of the block to be decoded after quantization from the code stream as an example, the decoder 200 can perform inverse quantization on the residual block through the inverse quantization unit 202. Specifically, the inverse quantization unit 202 can multiply each residual value in the parsed residual block by a quantization coefficient to reconstruct the residual value in the unquantized residual block corresponding to the block to be decoded, thereby obtaining the reconstructed residual block. The quantization coefficient is a quantization coefficient used by the encoding apparatus to quantize the residual block of the block to be decoded during encoding. In this way, the decoder 200 can reconstruct the block to be decoded based on the residual block reconstructed after inverse quantization, and obtain the reconstructed block of the block to be decoded.

The function of the residual inverse transform unit 203 can be the same as that of the residual inverse transform unit 107 of the encoder 100, which is used to perform inverse transform (for example, inverse DCT, inverse integer transform, or conceptually similar inverse transform process) on the quantized residual coefficients to obtain reconstructed residual values. The block obtained by the inverse transform is a residual block of the reconstructed block to be decoded in the pixel domain.

The function of the reconstruction unit 205 (for example, a summer) can be the same as that of the reconstruction unit 108 of the encoder 100.

The prediction processing unit 204 is used to receive or obtain encoded image data (for example, the prediction mode of the current image block) and reconstructed image data. The prediction processing unit 204 can also receive or obtain relevant parameters of the prediction mode and/or information about the selected prediction mode (for example, the decoding parameters mentioned above) from, for example, the code stream parsing unit 201, and predict the current image block based on related data and decoding parameters in the reconstructed image data to obtain a prediction block of the current image block.

The reconstruction unit 205 is used to add the reconstructed residual block to the prediction block to obtain the reconstructed block of the image to be decoded in the sample domain, for example, the residual values in the reconstructed residual block are added to prediction values in the prediction block.

The filter unit 206 is used to filter the reconstructed block to obtain a filtered block, which is the decoded image block.

Specifically, in the embodiment of the present disclosure, the decoder 200 is used to implement the decoding method described in the following embodiments.

It should be understood that in the encoder 100 and decoder 200 of the embodiments of the present disclosure, a processing result of a certain step can also be further processed and output to a next step. For example, after interpolation filter, motion vector derivation, or filter, etc., the processing result of the corresponding step can be further clipped or shifted.

In an example, a decoding process implemented by the decoder 200 can include steps 31 to 36.

In step 31, the code stream parsing unit 201 parses a prediction mode and a residual encoding mode.

In step 32, the code stream parsing unit 201 parses quantization related values (for example, a near value, a QP value, etc.) based on the prediction mode and the residual encoding mode.

In step 33, the inverse quantization unit 202 inverse quantizes residual coefficients based on the prediction mode and the quantization related values.

In step 34, the prediction processing unit 204 obtains a prediction value of each pixel of the current image block based on the prediction mode.

In step 35, the residual inverse transform unit 203 performs inverse transform on the residual coefficients to reconstruct a residual value of each pixel of the current image block.

In step 36, the reconstruction unit 205 obtains a reconstructed value of the pixel based on the prediction value and the residual value of each pixel of the current image block.

FIGs. 1 to 4 are only examples provided by the embodiments of the present disclosure. In some examples, the encoder 100, the decoder 200, and the encoding and decoding system 1 can include more or fewer components or units, which is not limited by the present disclosure.

The following image encoding and decoding methods provided in the embodiments of the present disclosure will be explained below with reference to the accompanying drawings.

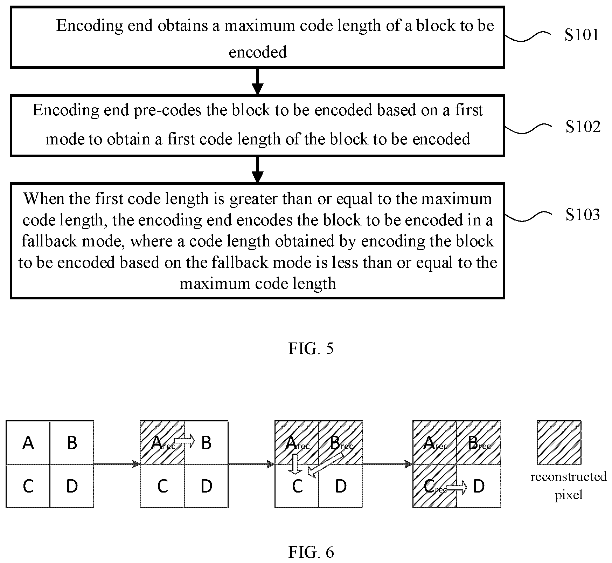

FIG. 5 is a flowchart of an image encoding method provided in the present disclosure. In an example, the image encoding method can be applied to the encoding and decoding system 1 shown in FIG. 1. The image encoding method can be performed by the encoding end 10. Specifically, the encoding method can be performed by the encoder 100 included in the encoding end 10. As shown in FIG. 5, the image encoding method provided in the embodiment of the present disclosure can include following steps S101 to S103.

In S101, an encoding end obtains a maximum code length of a block to be encoded.

The block to be encoded may include an encoding unit. Generally, when encoding an image frame in a video to be encoded, the encoding end can perform encoding in units of encoding units.

In addition, the above maximum code length is used to indicate a maximum code length that can be encoded for the block to be encoded. It should be understood that in order to prevent overflow of the code stream, the maximum code length can be determined based on a storage space of a code stream buffer at the encoding end in the encoding and decoding system 1 shown in FIG. 1. Therefore, the maximum code length is a maximum code stream length currently allowed to be cached in the storage space used by the encoding end to cache the encoded code stream.

In an example, the maximum code length is a sum of a length of the code stream that can be accommodated in the remaining space of the storage space and a length of the code stream output by the storage space per unit time.

In an example, the maximum code length is less than the sum of the length of the code stream that can be accommodated in the remaining space of the storage space and the length of the code stream output by the storage space per unit time.

As an example, the maximum code length can be the sum of the length of the code stream that can be accommodated in the remaining space of the storage space and the length of the code stream output by the storage space per unit time minus header information of the block to be encoded. The header information refers to data with a certain length at the front end of the code stream of each block to be encoded, which can be used to indicate image parameters of the current block to be encoded. For example, the image parameters include one or more of an image complexity, a prediction mode, target bits per pixel (BPP), and a texture complexity of the current block to be encoded.

It should be noted that, the code stream buffer outputs a certain amount of code stream to a channel while receiving the code stream of the current block encoded by the encoder. In other words, when receiving the code stream of the current block, the code stream buffer also outputs a certain amount of code stream. That is, the code stream input to the code stream buffer can also occupy the storage space occupied by the outgoing code stream before it flows out. Therefore, the maximum code length can be a sum of a code length that the code stream buffer flows out in a unit time and a code length that can be accommodated in the current remaining space of the code stream buffer.

In addition, the code length that the code stream buffer flows out in a unit time can be determined based on a channel bandwidth for the encoding end transmitting the encoded code stream.

In S102, the encoding end pre-codes the block to be encoded based on a first mode to obtain a first code length of the block to be encoded.

The first mode can be a prediction mode preset by the encoding end.

In an example, the prediction mode preset by the encoding end can include a point prediction mode, an intra prediction mode, an intra block copy mode, and a sample mode, etc.

The intra prediction mode is a prediction mode in which reconstructed values of pixels in one or more neighboring blocks around a block to be predicted are used as prediction values. The block copy prediction mode is a prediction mode in which reconstructed values of pixels of one or more surrounding coded (decoded) blocks (not necessarily neighboring) are used as prediction values. In reconstruction, the sample mode is a mode in which reconstructed values with a fixed bit width are directly decoded, that is, a prediction mode without reference. The point prediction mode refers to a prediction mode in which reconstructed values of one or more neighboring pixels around a pixel to be predicted are taken as a prediction value of the pixel to be predicted.

The point prediction mode can include one or a combination of a plurality of predictions of a vertical prediction, a horizontal prediction, a vertical mean prediction, and a horizontal mean prediction.

The vertical prediction refers to obtaining a prediction value (PointPredData) of the pixel to be predicted by using a reconstructed value of a pixel on an upper side (which can be either an adjacent upper side or a non-adjacent but close upper side) of the pixel to be predicted. The horizontal prediction refers to obtaining a prediction value of the pixel to be predicted by using a reconstructed value of a pixel on a left side of the pixel to be predicted (which can be either an adjacent left side or a non-adjacent but close left side). The vertical mean prediction refers to obtaining a prediction value of the pixel to be predicted by using reconstructed values of pixels above and below the predicted pixel to be predicted. The horizontal mean prediction refers to obtaining a prediction value of the pixel to be predicted by using reconstructed values of pixels on left and right sides of the pixel to be predicted.

Specifically, the encoding end can respectively predict the block to be encoded by adopting the above preset different prediction modes, and predict the coding performance of the block to be encoded based on the different prediction modes to determine the first mode. The coding performance can be compression rate, coding efficiency or coding loss rate.

For example, the encoding end can respectively predict the block to be encoded by using different prediction modes, and after obtaining predicted blocks based on different prediction modes, the encoding end performs steps 22 to 25 described above to obtain code streams of the block to be encoded in different prediction modes. For example, the encoding end can determine a prediction mode with the shortest time as the first mode by determining times to obtain the code streams of the block to be encoded in different prediction modes. That is, the encoding end can determine a prediction mode with the highest coding efficiency as the first mode.

Thus, the above first code length can be a code stream length of the block to be encoded based on the first mode obtained by the encoding end by using the first mode to predict the block to be encoded, and executing steps 22 to 25 described above after obtaining the prediction block.

In S103, when the first code length is greater than or equal to the maximum code length, the encoding end encodes the block to be encoded in a fallback mode, where a code length obtained by encoding the block to be encoded based on the fallback mode is less than the maximum code length.

The block to be encoded is encoded in the fallback mode, that is, based on a predetermined target code length, the block to be encoded is encoded in a fixed code length encoding manner, and a code length obtained by encoding the block to be encoded is the target code length. The target code length is less than the maximum code length.

It should be noted that the size of the storage space of the code stream buffer is fixed. If stream data input to the code stream buffer is too large, causing data that needs to be temporarily stored in the code stream buffer to exceed the size of the storage space of the code stream buffer, the code stream will overflow. In this way, excess data will lost, so that image information in the image frame of the video to be encoded will lost, and the image frame cannot be completely decoded according to code stream data output by the code stream buffer.

If the first code length is greater than or equal to the above maximum code length, when the code stream of the block to be encoded obtained based on the first mode is transmitted through the code stream buffer, the code stream of the code stream buffer will overflow. In order to avoid the overflow of the code stream, the encoding end can adopt the fallback mode to encode the block to be encoded, so that the code length obtained by encoding the block to be encoded is less than the maximum code length.

In some embodiments, if the current block to be encoded is encoded in the fallback mode, complexity information in header information of the block to be encoded may not be updated because the target code length of the block to be encoded is fixed. The complexity information can be used to calculate a quantization parameter of the block to be encoded.

In some embodiments, the encoding end can select a midpoint prediction fallback mode (MPPF Mode) to predict the block to be encoded, and after obtaining a prediction block, encode the block to be encoded based on the fixed code length encoding manner to obtain the code stream of the block to be encoded.

According to the MPPF mode, the encoding end can first divide the block to be encoded into a plurality of sub-image blocks of 2x2 pixel points, and each 2x2 sub-image block needs to calculate a middle value. The middle value is calculated as the following formula (1):

$$\text{middle} = 1 << (\text{bitDepth} - 1) \qquad \text{formula (1)}$$

where bitDepth is an image bit width of a color component channel of the current sub-block to be encoded, and 1<< indicates shift left by one bit.

Furthermore, the encoding end can determine a mean of sub-blocks to be encoded.

In one case, if a surrounding reconstructed image cannot be obtained for the current sub-block, the mean is the middle value mentioned above.

In another case, the mean is an average of reconstructed values of a sub-block of 2x1 pixel points in a previous row of the sub-block. If the reconstructed values of the sub-block of 2x1 pixel points in the previous row cannot be obtained, an average value of reconstructed values of a previous reconstructed 2x2 sub-block of this sub-block is taken.

Furthermore, the encoding end can determine a bias value of this sub-block, which is used to limit a value of the mean. The encoding end can use the bias value and the middle value to clamp the mean, so as to limit the mean to a value range composed of the bias value and the middle value. Therefore, the mean adjusted by the bias value and the middle value is determined as a prediction value of the current sub-block of 2x2 pixel points to be encoded.

where the bias value can be determined according to the following formula (2):

$$\text{bias} = 1 << (\text{mppStepSize}[k] - 1) \qquad \text{formula (2)}$$

where mppStepSize is used to indicate a quantization step in a quantization process of a component of the block to be encoded, [k] is used to indicate a [k]-th component of the block to be encoded, and 1<<represents shift left by one bit.

In addition, based on the MPPF mode, as shown in FIG. 6, a residual value of the sub-block of 2x2 pixel points can be calculated based on an order of a pixel point A in an upper left corner, a pixel point B in an upper right corner, a pixel point C in a lower left corner, and a pixel point D in a lower right corner.

In an example, in the process of reconstructing the sub-block to be encoded, the reconstructed value of each pixel point can be determined in sequence according to the above order of the pixel point A in the upper left corner, the pixel point B in the upper right corner, the pixel point C in the lower left corner, and the pixel point D in the lower right corner.

In some embodiments, the block to be encoded may include one or more components.

In an example, the block to be encoded can only include a luma component. Or, the block to be encoded can include three components, for example, luma Y, chroma Cb, and chroma Cr (or three components: red R, green G, and blue B, or three components: luma Y, chroma U, and chroma V). Or, on the basis of the above three components, the block to be encoded can also include an $\alpha$ component, which means that the block to be encoded can include four components in total. The $\alpha$ component is a pixel transparency component. When a value of the $\alpha$ component is 0, the pixel corresponding to the block to be encoded is transparent, and an image bit width of the $\alpha$ component is different from the other three components.

In some embodiments, the encoding end can determine a maximum code length that can be encoded for each component, and then determine whether to adopt the fallback mode for each component based on the determined maximum code length.

In an example, the block to be encoded can include three components: a first chroma component, a second chroma component, and a luma component. For example, the first chroma component, the second chroma component, and the luma component can be the luma Y, chroma Cb, and chroma Cr components, or the luma Y, chroma U, and chroma V components, respectively.

Therefore, the encoding end can determine whether each of the first chroma component, the second chroma component, and the luma component needs to be encoded in the fallback mode.

In some embodiments, based on the maximum code length, the encoding end can determine a maximum code length of the first chroma component, a maximum code length of the second chroma component, and a maximum code length of the luma component according to a preset ratio.

The maximum code length of the first chroma component is a maximum code length that can be encoded for the first chroma component of the block to be encoded. The maximum code length of the second chroma component is a maximum code length that can be encoded for the second chroma component of the block to be encoded. The maximum code length of the luma component is a maximum code length that can be encoded for the luma component of the block to be encoded. It should be understood that a sum of the maximum code length of the first chroma component, the maximum code length of the second chroma component, and the maximum code length of the luma component should not exceed the maximum code length that can be encoded for the block to be encoded.

The sum of the maximum code length of the first chroma component, the maximum code length of the second chroma component, and the maximum code length of the luma component can be the maximum code length of the block to be encoded or a code length that the storage space flows out per unit time.

It should be noted that the code length that the code stream buffer flows out per unit time is less than the maximum code length of the block to be encoded. Therefore, the sum of the maximum code length of the first chroma component, the maximum code length of the second chroma component, and the maximum code length of the luma component can be the code length that the storage space flows out per unit time. Moreover, the maximum code length of the first chroma component, the maximum code length of the second chroma component, and the maximum code length of the luma component are determined according to the code length that the storage space flows out per unit time, so that an encoding code length of the block to be encoded can be reduced, the compression rate can be increased, and the memory occupied by the block in the code stream buffer can be reduced.

In an example, the preset ratio of the maximum code length of the first chroma component, the maximum code length of the second chroma component, and the maximum code length of the luma component can be 1:1:1, 2:1:1, or 4:1:1.

In some embodiments, if the block to be encoded includes a plurality of components, the plurality of components of the block to be encoded share the fallback mode (sharing refers to all the plurality of components adopting the fallback mode or not adopting the fallback mode), so that the encoding end can only determine whether to adopt the fallback mode for one component. In a case where one component of the plurality of components adopts the fallback mode, other components also adopt the fallback mode. Or, if a part of the plurality of components of the block to be encoded shares the fallback mode, the encoding end can only determine whether to adopt the fallback mode for one component of the part of the plurality of components, and whether to adopt the fallback mode for other components except this part. Or, the plurality of components of the block to be encoded do not share the fallback mode, and the encoding end can determine whether to adopt the fallback mode for each component respectively.

In an example, the encoding end can determine whether to adopt the fallback mode to encode the first chroma component, the second chroma component, and the luma component based on one or more of the maximum code length of the first chroma component, the maximum code length of the second chroma component, and the maximum code length of the luma component. Several possible implementations shows as follows.

Implementation 1: the encoding end determines whether to adopt the fallback mode to encode the first chroma component, the second chroma component, and the luma component based on any one of the maximum code length of the first chroma component, the maximum code length of the second chroma component, and the maximum code length of the luma component.

In an example, the encoding end can first determine whether to adopt the fallback mode to encode any one of the first chroma component, the second chroma component, and the luma component. Then, when determining to adopt the fallback mode for the component, it can be determined that the other two components are also encoded in the fallback mode.

For example, the encoding end can first determine whether to adopt the fallback mode to encode the first chroma component based on the maximum code length of the first chroma component. When determining to adopt the fallback mode for the first chroma component, it can be determined that the second chroma component and the luma component are also encoded in the fallback mode.

Similarly, the encoding end can first determine whether to adopt the fallback mode to encode the second chroma component based on the maximum code length of the second chroma component, or determine whether to adopt the fallback mode to encode the luma component based on the maximum code length of the luma component, without listing them one by one.

In an example, the process of the encoding end determining whether to adopt the fallback mode to encode the first chroma component based on the maximum code length of the first chroma component can specifically include: the encoding end pre-codes the first chroma component based on the first mode to obtain a first chroma code length of the first chroma component. Furthermore, in a case where the first chroma code length is greater than or equal to the maximum code length of the first chroma component, it is determined to adopt the fallback mode to encode the first chroma component.

Similarly, the process of the encoding end determining whether to adopt the fallback mode to encode the second chroma component based on the maximum code length of the second chroma component can specifically include: the encoding end pre-codes the second chroma component based on the first mode to obtain a second chroma code length of the second chroma component. Furthermore, in a case where the second chroma code length is greater than or equal to the maximum code length of the second chroma component, it is determined to adopt the fallback mode to encode the second chroma component.

Similarly, the process of the encoding end determining whether to adopt the fallback mode to encode the luma component based on the maximum code length of the luma component can specifically include: the encoding end pre-codes the luma component based on the first mode to obtain a luma code length of the luma component. Furthermore, in a case where the luma code length is greater than or equal to the maximum code length of the luma component, it is determined to adopt the fallback mode to encode the luma component.

The process of pre-coding the first chroma component, the second chroma component or the luma component based on the first mode can refer to the related description of pre-coding based on the first mode in step S102, and will not be repeated here.

Implementation 2: the encoding end determines whether to adopt the fallback mode to encode the first chroma component and the second chroma component based on the maximum code length of the first chroma or the maximum code length of the second chroma, and determines whether to adopt the fallback mode to encode the luma component based on the maximum code length of the luma component.

In an example, for the first chroma component and the second chroma component, the encoding end can first determine whether to adopt the fallback mode to encode the first chroma component, and then determine that the second chroma component is also encoded in the fallback mode when determining to adopt the fallback mode for the first chroma component. Or, the encoding end can first determine whether to adopt the fallback mode to encode the second chroma component, and then determine that the first chroma component is also encoded in the fallback mode when determining to adopt the fallback mode for the second chroma component.

The specific process of the encoding end determining whether to adopt the fallback mode to encode the first chroma component based on the maximum code length of the first chroma component, and the encoding end determining whether to adopt the fallback mode to encode the second chroma component based on the maximum code length of the second chroma component can refer to the related description in Implementation 1 above.

In a possible implementation, for the luma component, the encoding end can determine whether to adopt the fallback mode for encoding based on the maximum code length of the luma component. The specific process of the encoding end determining whether to adopt the fallback mode to encode the luma component based on the maximum code length of the luma component can refer to the related description in Implementation 1 above.

In another possible implementation, for the luma component, when the encoding end determines to adopt the fallback mode to encode the first chroma component and the second chroma component, the encoding end can determine code lengths of the first chroma component and the second chroma component encoded in the fallback mode, and pre-code the luma component based on the first mode to obtain a luma code length of the luma component. Furthermore, in a case where a sum of the luma code length and the code lengths of the first chroma component and the second chroma component encoded in the fallback mode is greater than or equal to the maximum code length of the block to be encoded, the encoding end determines to adopt the fallback mode to encode the luma component.

Implementation 3: the encoding end determines whether to adopt the fallback mode to encode the first chroma component based on the maximum code length of the first chroma component, determines whether to adopt the fallback mode to encode the second chroma component based on the maximum code length of the second chroma component, and determines whether to adopt the fallback mode to encode luma component based on the maximum code length of the luma component.

The specific process of the encoding end determining whether to adopt the fallback mode to encode the first chroma component based on the maximum code length of the first chroma component, determining whether to adopt the fallback mode to encode the second chroma component based on the maximum code length of the second chroma component, and determining whether to adopt the fallback mode to encode luma component based on the maximum code length of the luma component can refer to the related description in Implementation 1 above.

In some embodiments, when the block to be encoded includes three components: the first chroma component, the second chroma component, and the luma component, the encoding end can divide the target code length of the block to be encoded into three sub-code lengths based on the preset ratio mentioned above, with one component corresponding to one sub-code length. Furthermore, based on the sub-code length of each component, the component corresponding to each sub-code length is encoded in the fallback mode respectively.

In an example, for a block to be encoded in a YCoCg image, a Y component: a Co component: a Cg component can be 2:1:1. For a block to be encoded in a YUV444 image, a Y component: a U component: a V component can be 2:1:1. For a block to be encoded in a YUV422 image, a Y component: a U component: a V component can be 2:1:1. For a block to be encoded in a YUV420 image, a Y component: a U component: a V component can be 4:1:1. For a block to be encoded in a YUV400 image, only a luma component Y is included in the block to be encoded.

In an example, for a block to be encoded in an RGB image, the encoding end can divide the target code length of the block to be encoded into three sub-code lengths based on a 1:1:1 ratio of a R component: a G component: a B component, with one component corresponding to one sub-code length.

It should be noted that during the encoding process, for an image block in RGB format, since human eyes are more sensitive to image luma, in order to improve the image effect viewed by human eyes, the image block in RGB format is generally converted into an image block in YCoCg format before encoding. However, if the encoding end determines that all components of the converted image block in YCoCg format need to adopt the fallback mode during the encoding process, it indicates that the code length required for encoding the converted image block in YCoCg format is relatively long, and the encoding end can encode the image block in RGB format. In some embodiments, for the component with the fallback mode selected, since the sub-code length of the component is determined, there is no need to update the quantization parameter in header information of the current component, and there is no need to update information such as the complexity of the current component for indicating the code stream of the component.

In some embodiments, when the first code length is less than the maximum code length, the encoding end can adopt the sample mode to encode original pixel values of the block to be encoded. In an example, the encoding end can adopt the sample mode to encode quantized and transformed values of the original pixel values of the block to be encoded. In this way, by adopting the sample mode to encode the block to be encoded by the encoding end, the effect of reconstructing the image of the block to be encoded can be improved.

In some embodiments, when the first code length is less than the maximum code length, the encoding end can also use the residual encoding mode to encode the block to be encoded.

In an example, a code word of the sample mode is the same as a code word of the fallback mode. The code word of the sample mode is reference data used to indicate the sample mode. The code word of the fallback mode is reference data used to indicate the fallback mode.

In another example, the code word of the fallback mode is unique. It should be understood that the code word of the sample mode and the code word of the fallback mode are not the same in this case.

In some embodiments, the above fallback mode can also be used when the block to be encoded does not overflow (that is, the encoding end still adopts the fallback mode when the first code length is less than the maximum code length), which will be described as follows.

In an example, when the occupied memory in the code stream buffer is less than or equal to a first threshold of the total memory of the code stream buffer, the encoding end can adopt other code length values greater than the target code length to encode the block to be encoded. For example, the first threshold can be 30% of the total memory of the code stream buffer, so the encoding end can use a value greater than the target code length, such as 1.5 times the target code length, to encode the block to be encoded. In an example, when the occupied memory in the code stream buffer is greater than or equal to a second threshold of the total memory of the code stream buffer, the encoding end can adopt other code length values smaller than the target code length to encode the block to be encoded. For example, the second threshold can be 85% of the total memory of the code stream buffer, so the encoding end can use a value smaller than the target code length, such as 0.5 times the target code length, to encode the block to be encoded. When the occupied memory in the code stream buffer is less than the second threshold of the total memory of the code stream buffer and greater than the first threshold, the encoding end can also adopt the target code length to encode the block to be encoded.

Accordingly, when the decoding end adopts the fallback mode decoding without overflow in the code stream buffer, the decoding end can determine the code length of the block to be decoded based on the size of the memory already occupied in the code stream buffer when encoding the block to be decoded.

As mentioned above, the encoder/decoder will record the state of the code stream buffer. The encoding end will update the state of the code stream buffer after encoding a block to be decoded, and the decoding end will also update the state of the code stream buffer after parsing the block to be decoded. The update of the state of the code stream buffer is related to a target compression rate and the size of the code stream of the encoded/decoded block. The target compression rate is written in the code stream of the image header. Therefore, as long as the encoding end and the decoding end update the state of the code stream buffer in the same way, it can ensure that the state of the code stream buffer for encoding/decoding is consistent.

Therefore, when both the encoding end and the decoding end include code stream buffers, the decoding/encoding end can know the memory occupation of the code stream buffers during encoding/decoding by recording states of each other's code stream buffers. When only the encoding end or only the decoding end includes a code stream buffer, the encoding end can obtain the memory occupation of the code stream buffer during decoding by recording the state of the code stream buffer at the decoding end, and the decoding end can also obtain the memory occupation of the code stream buffer during encoding by recording the state of the code stream buffer at the encoding end.

The image encoding method provided in the embodiments of the present disclosure has at least the following beneficial effects: the method can first pre-code the block to be encoded, compare the code stream length obtained from pre-coding with the maximum code length allowed to be occupied by the block to be encoded, and determine whether the code stream will overflow according to the comparison result. Furthermore, when it is determined that there will be code stream overflow, the fallback mode is adopted to encode the block to be encoded to avoid the loss of image information of the block to be encoded.

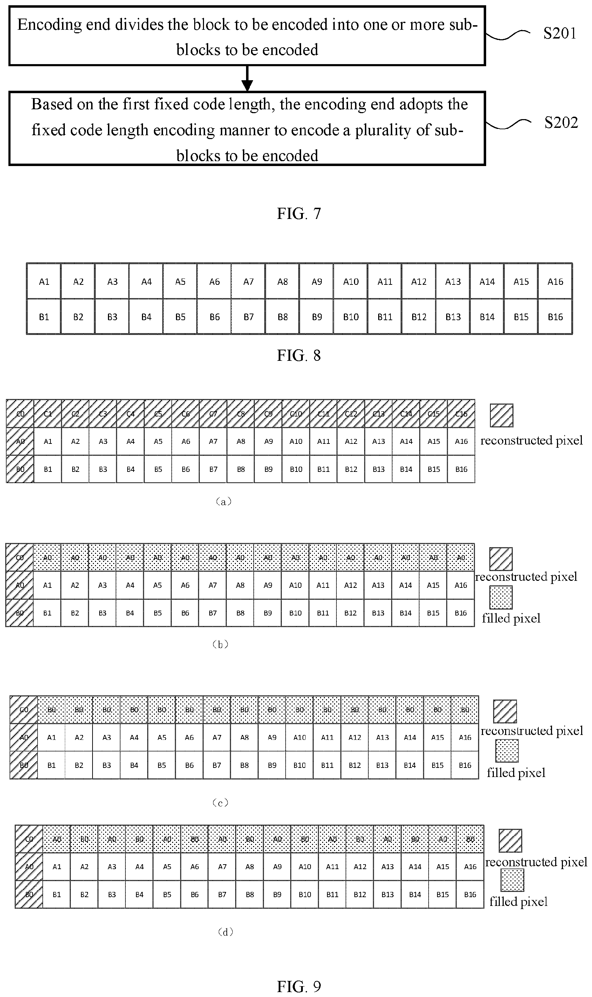

In some embodiments, as shown in FIG. 7, the process of encoding the block to be encoded by the encoding end based on the fallback mode and the fixed code length encoding manner can be specifically implemented as follows.

In S201, the encoding end divides the block to be encoded into one or more sub-blocks to be encoded.

In an example, in the process of encoding the block to be encoded based on the fallback mode, the fixed code length encoding manner is generally adopted to determine respective sub-blocks of the block to be encoded for encoding.

In an example, the fixed code length and the number of sub-blocks to be encoded in the block to be encoded satisfy the following formula (3):

$$subblock_{num} \times fixed_{len} \leq fixed_{bit} \qquad \text{formula (3)}$$

where $subblock_{num}$ is the number of sub-blocks to be encoded in the block to be encoded, $fixed_{len}$ is the fixed code length, and $fixed_{bit}$ is the target code length of the block to be encoded.

In an example, the target code length of the block to be encoded can be determined according to target bits per pixel (BPP) of the block to be encoded.

The target BPP are used to indicate a code length required for encoding each pixel point of the block to be encoded at the target compression rate. The target BPP can be determined based on the target compression rate of the block to be encoded.

In an example, the encoding end can obtain the target BPP of the block to be encoded, and based on the target BPP and the number of pixel points of the block to be encoded, is determine a product of the target BPP and the number of pixel points of the block to be encoded as the target code length of the block to be encoded.

In an example, the target code length can also be less than the product of the target BPP and the number of pixel points of the block to be encoded.

For example, the target code length can be the product of the target BPP and the number of pixel points of the block to be encoded minus an encoding cost required for encoding the fallback mode. A parsing result of the encoding cost is used to indicate that the encoding mode is the fallback mode. For example, the parsing result of the encoding cost can be an identifier of the fallback mode (the code word of the fallback mode), etc.

In some embodiments, when the block to be encoded includes a plurality of components, the encoding end can first divide the block into the plurality of components, and then divide each component into one or more sub-blocks to be encoded.

For example, according to the related description in step 103 above, in the case where the block to be encoded can include three components: the first chroma component, the second chroma component, and the luma component, the encoding end can divide the target code length of the block to be encoded into three sub-code lengths based on a preset ratio, with one component corresponding to one sub-code length. Furthermore, based on the sub-code length corresponding to each component, the encoding end can divide the component into one or more sub-encoding blocks.

Taking a preset ratio of a Y component: a Co component: a Cg component can be 2:1:1 as an example, the sub-code length of the Co component can be determined according to the following formula (4):

$$\text{sub-code length of Co component} = [(\frac{\text{target code length}}{2}) - 3 \times \text{encoding cost of fallback mode}]/2$$

$$\text{formula (4)}$$

The sub-code length of the Cg component and the sub-code length of the Co component occupy the same proportion in the target code length, and the sub-code length of Cg component can also be determined according to formula (4).

Furthermore, the sub-code length of the Y component can be obtained by subtracting the sub-code length of the Co component and the sub-code length of the Cg component from the target code length.

In other embodiments, when the block to be encoded includes a plurality of components, the encoding end can first divide the block to be encoded into one or more sub-encoding blocks, and for each sub-encoding block, further divide the sub-encoding block into sub-blocks of each component according to a ratio among each component.

Taking the example of dividing the block to be encoded into one or more sub-encoding blocks, the process of dividing the block to be encoded will be explained as below.

In a possible implementation, the encoding end divides the block to be encoded into one or more sub-blocks with a preset size.

The preset size of the sub-blocks to be encoded mentioned above can be 2x1 pixel points, 2x2 pixel points, etc.

Specifically, the encoding end can determine the number of sub-blocks to be encoded in the block to be encoded based on the preset size of the sub-blocks. The encoding end can divide the block to be encoded into one or more sub-blocks to be encoded based on the number of sub-blocks to be encoded.

For example, as shown in FIG. 8, the block to be encoded includes two rows of pixel points A1 to A16 and B1 to B16. If the size of a sub-block to be encoded is 2x2 pixel points, the encoding end can determine that the number of sub-blocks to be encoded is 8. For example, the sub-block to be encoded can be an image block composed of A1, A2, B1, and an image block composed of A3, A4, B3 and B4.

In an example, after determining the number of sub-blocks to be encoded, the encoding end can determine a first fixed code length for encoding the sub-block to be encoded based on formula (3) above.

In another possible implementation, the encoding end divides the block to be encoded into one or more sub-blocks to be encoded with a preset first fixed code length.

In an example, the first fixed code length can be a preset code length value for encoding the sub-block to be encoded.

In an example, when the sub-block to be encoded only includes one pixel, the first fixed code length can be the target BPP mentioned above.

Specifically, based on formula (3) above, the encoding end can determine the number of sub-blocks to be encoded of the block to be encoded according to the target code length of the block to be encoded and the first fixed code length for encoding the sub-block to be encoded. Furthermore, based on the number of sub-blocks to be encoded, the block to be encoded is divided into one or more sub-blocks to be encoded.

In an example, according to formula (3) above, the number of sub-blocks to be encoded can be an integer value obtained by dividing the target code length of the block to be encoded by the first fixed code length and then rounding down.

For example, if the size of the block to be encoded is 16x2 pixel points, the first fixed code length is 4, and the target code length of the block to be encoded is 23, the number of sub-blocks to be encoded is an integer value 5 obtained by rounding down 23/4. The number of sub-blocks is odd. The 16x2 pixels are divided into 5 sub-blocks to be encoded. The sizes of the sub-blocks to be encoded are 3x2 pixel points, 3x2 pixel points, 3x2 pixel points, 3x2 pixel points, and 4x2 pixel points, respectively.

If the size of the block to be encoded is 16x2 pixel points, the first fixed code length is 4, and the target code length of the block to be encoded is 25, according to formula (3) above, the number of sub-blocks to be encoded is an integer value 6 obtained by rounding down 25/4. The number of sub-blocks is even. A 16x2 image block can be divided into two image blocks of 16x1 pixel points. Each image block of 16x1 pixel points can be divided into an image block of 5x1 pixel points, an image block of 5x1 pixel points, and an image block of 6x1 pixel points.

It should be noted that since a prediction value of the sub-block to be encoded can be determined based on reconstructed pixel points in a previous row, when the sub-block to be encoded includes two rows of pixel points, the encoding end can control the dividing number of the sub-blocks to be even, to ensure that each sub-block to be encoded is related to pixel points in the first row of the block to be encoded. In this way, prediction values of pixel points in the first row can be determined based on reconstructed pixel points in the previous row, so prediction values of pixel points in the second row of the sub-block to be encoded can be determined according to the reconstructed pixel points in the first row. It should be understood that if the sub-block to be encoded includes Z rows of pixel points, the encoding end can control the dividing number of sub-blocks to be encoded to be an integer multiple of Z, to ensure that each encoding sub-block is related to the first row of pixel points of the encoding block.

In an example, the first fixed code length is a non-negative integer. Taking the first fixed code length being the target BPP as an example, if the block to be encoded is an image block of 16x2 pixel points, the encoding end divides the image block into two sub-blocks to be encoded which are image blocks of 16x1 pixel points. In an example, if the target BPP are 3, both first fixed code lengths of two image blocks of 16x1 pixel points are 3. In another example, if the target BPP are 2.5, the encoding end can determine that the first fixed code length of the first sub-block to be encoded is 3, and the first fixed code length of the second sub-block to be encoded is 2.

In S202, based on the first fixed code length, the encoding end adopts the fixed code length encoding manner to encode a plurality of sub-blocks to be encoded.

The code stream length obtained by encoding each sub-block to be encoded in the plurality of sub-blocks to be encoded is the first fixed code length.

For any sub-block to be encoded, the encoding end determines original values and prediction values of one or more pixel points of the sub-block to be encoded.

In some embodiments, the encoding end can determine an average of reconstructed values of pixel points in a previous row adjacent to the sub-block to be encoded as the prediction value of the sub-block to be encoded.

In an example, the prediction value of the sub-block to be encoded can be determined according to the following formula (5):

$$\text{prediction value} = (\text{sum od reconstructed values of respective reference pixel points} + 0.5 \times S)/S \qquad \text{formula (5)}$$

where S is a number of reference pixel points, and S is a positive integer.

It should be noted that in the process of calculating the prediction value, the purpose of adding $0.5 \times S$ to the sum of the reconstructed values of respective reference pixel points is to round off the average value of the reconstructed values.

For example, if the current encoding block is as shown in (a) of FIG. 9, the size of the block to be encoded is 16x2 pixel points, including two rows of pixel points A1 to A16 and B1 to B16. Reconstructed pixel points in the previous row include C0 to C16. If the sub-block to be encoded is an image block composed of A1, A2, A3, B1, B2, and B3, and reference pixel points in the previous row corresponding to the sub-block to be encoded are C1, C2, and C3, so the prediction value of the sub-block to be encoded is (reconstructed value of C1 + reconstructed value of C2 + reconstructed value of C3 + 1.5)/3.

In an example, if the reconstructed values of the pixel points in the previous row of the sub-block to be encoded cannot be obtained, the encoding end can fill the pixel points in the previous row of the sub-block to be encoded with reconstructed pixel points in a previous column. For example, as shown in (b) of FIG. 9, the encoding end fills all pixel points in the previous row with a reconstructed value of a pixel point A0 in the previous column. Therefore, if the sub-block to be encoded is an image block composed of A1, A2, A3, B1, B2 and B3, reference pixel points in the previous row corresponding to the sub-block to be encoded are three A0s, and further, the encoding end can determine the prediction value of the sub-block to be encoded according to reconstructed values of the three A0s.

Or, as shown in (c) of FIG. 9, the encoding end fills all pixel points in the previous row with a reconstructed value of a pixel point B0 in the previous column. Similarly, if the sub-block to be encoded is an image block composed of A1, A2, A3, B1, B2 and B3, reference pixel points in the previous row corresponding to the sub-block to be encoded are three B0s, and further, the encoding end can determine the prediction value of the sub-block to be encoded according to reconstructed values of the three B0s.

Or, as shown in (d) of FIG. 9, the encoding end alternately fills all pixel points in the previous row with reconstructed values of pixel points A0 and B0 in the previous column.

Furthermore, the encoding end can determine an average value of reconstructed values after filling a previous row adjacent to the sub-block to be encoded as the prediction value of the sub-block to be encoded.

In other embodiments, the encoding end can determine an average value of reconstructed values of pixel points in a previous column adjacent to the sub-block to be encoded as the prediction value of the sub-block to be encoded.

For example, if the current encoding block is shown in (a) of FIG. 9, the size of the block to be encoded is 16x2 pixel points, including two rows of pixel points A1 to A16 and B1 to B16. Reconstructed pixel points in the previous column include C0, A0, and B0. If the sub-block to be encoded is an image block composed of A1, A2, A3, B1, B2, and B3, and reference pixel points in the previous column corresponding to the sub-block to be encoded are A0 and B0, so the prediction value of the sub-block to be encoded is (reconstructed value of A0 + reconstructed value of B0 + 1)/2.

The above manner of determining the prediction value of the sub-block to be encoded is only exemplary. The encoding end can also adopt any prediction mode as described in step 102, or other possible prediction modes to determine the prediction value of the sub-block to be encoded. In an example, the encoding end can adopt one of preset prediction modes to determine the prediction value of the sub-block to be encoded.

In a possible implementation, the encoding end quantizes a residual value of the sub-block to be encoded and encodes the quantized residual value to obtain a code stream of the sub-block to be encoded. The residual value is a difference between an original value and the prediction value of the sub-block to be encoded.

In an example, before quantization of the residual value of the sub-block to be encoded, the residual value can also be transformed.

Furthermore, in order that the sub-block to be encoded can serve as a reference for prediction values of other sub-blocks to be encoded, the sub-block to be encoded can be reconstructed. When reconstructing the sub-block to be encoded, the encoding end can perform inverse quantization on the residual value to obtain an inverse quantized residual value, and reconstruct the sub-block to be encoded based on the inverse quantized residual value and the prediction value.

In another possible implementation, the encoding end can quantize a high-bit value of an image bit width of the sub-block to be encoded, and encode the quantized high-bit value of the image bit width. The high-bit value of the image bit width is a value of the first N bits of a binary number corresponding to the image bit width, where N is a positive integer. For example, N can be 4, 5 and other possible numbers. In an example, the high-bit value can be a numerical value used to indicate a color of the sub-block to be encoded.

Furthermore, in order that the sub-block to be encoded can serve as a reference for prediction values of other sub-blocks to be encoded, the sub-block to be encoded can be reconstructed. When reconstructing the sub-block to be encoded, the encoding end parses the code stream of the image block corresponding to the sub-block to obtain the high-bit value of the image bit width corresponding to the sub-block to be encoded. Then, the high-bit value of the image bit width can be inverse quantized to obtain the inverse quantized high-bit value of the image bit width, which is combined with a low-bit value of the prediction value to reconstruct the sub-block to be encoded.

The low-bit value of the prediction value is used to indicate a value of the last M bits of a binary number corresponding to the prediction value, where M is a positive integer. For example, M can be 4, 5 and other possible numbers. In an example, the low-bit value can be a numerical value used to indicate a texture in the prediction value. A sum of N and M is the image bit width of the sub-block to be decoded, and N is the first fixed code length.

As an example of the low-bit value of the prediction value, if the image bit width (a code length of the original value) is 8 and the first fixed code length N of the sub-block to be encoded is 4, then both M and N are 4. If the prediction value of the sub-block to be encoded is 127, the corresponding binary code is 01111111, and the low-bit value corresponding to the last M bits (the last 4 bits) are 1111, which is 15, that is, a decimal value corresponding to the last 4 bits of the prediction value is 15.

In another possible implementation, the encoding end can quantize the low-bit value of the image bit width of the sub-block to be encoded, and encode the low-bit value of the quantized image bit width. The low-bit value of the image bit width is a value of the last N bits of a binary number corresponding to the image bit width, where N is a positive integer. In an example, the low-bit value can be a numerical value used to indicate the texture of the sub-block to be encoded.

Furthermore, in order that the sub-block to be encoded can serve as a reference for prediction values of other sub-blocks to be encoded, the sub-block to be encoded can be reconstructed. When reconstructing the sub-block to be encoded, the encoding end parses the code stream of the image block corresponding to the sub-block to obtain the low-bit value of the image bit width corresponding to the sub-block to be encoded. Then, the low-bit value of the image bit width can be inverse quantized to obtain the inverse quantized low-bit value of the image bit width, and combined with a zero-padded value of the high-bit value of the prediction value to reconstruct the sub-block to be encoded.

The high-bit value of the prediction value is used to indicate the value of the first M bits of the binary number corresponding to the prediction value, where M is a positive integer. In an example, the high-bit value can be a numerical value used to indicate the color in the prediction value. The sum of N and M is the image bit width of the sub-block to be encoded, and N is the first fixed code length.

As an example of the high-bit value of the prediction value, if the image bit width (a code length of the original value) is 8 and the first fixed code length N of the sub-block to be encoded is 4, then both M and N are 4. If the prediction value of the sub-block to be encoded is 127, the corresponding binary code is 01111111, and the high-bit value corresponding to the first M bits (the first 4 bits) are 0111. The binary code after zero padding of the last 8-M bits is 01110000, that is, the decimal value corresponding to the high-bit value after zero padding is 112.

In an example, for each sub-block to be encoded, if the coefficient value (for example, residual value, original value, etc.) of the sub-block to be encoded is on a boundary of a expressible range of the first fixed code length, a suffix can be added to the code stream of the sub-block to be encoded in the transmission process to indicate the coefficient value of the sub-block to be encoded. For example, if the first fixed code length of the sub-block to be encoded is 3, since the range of coefficient values that can be represented by 3-bit binary data is [0, 7], if the current coefficient value is between [1, 8], the encoding end can add a suffix 0 to the code stream of the sub-block to be encoded. The suffix can be determined according to preset suffix setting rules. Exemplary, the preset suffix setting rules may include possible rules such as a suffix 0 indicating negative numbers, a suffix 1 indicating integers, a suffix 0 indicating that the range of coefficient values that can be represented is increased by one digit to the right (for example, the above range [0, 7] is increased by one digit to the right as [1, 8]). Based on this embodiment, the block to be encoded can be divided into a plurality of sub-blocks to be encoded, and each sub-block to be encoded can be encoded with the first fixed code length based on the fixed code length encoding manner, so that the encoded code stream of the block to be encoded can be smaller than the maximum code length that can be cached in the code stream buffer to avoid the overflow of the code stream.

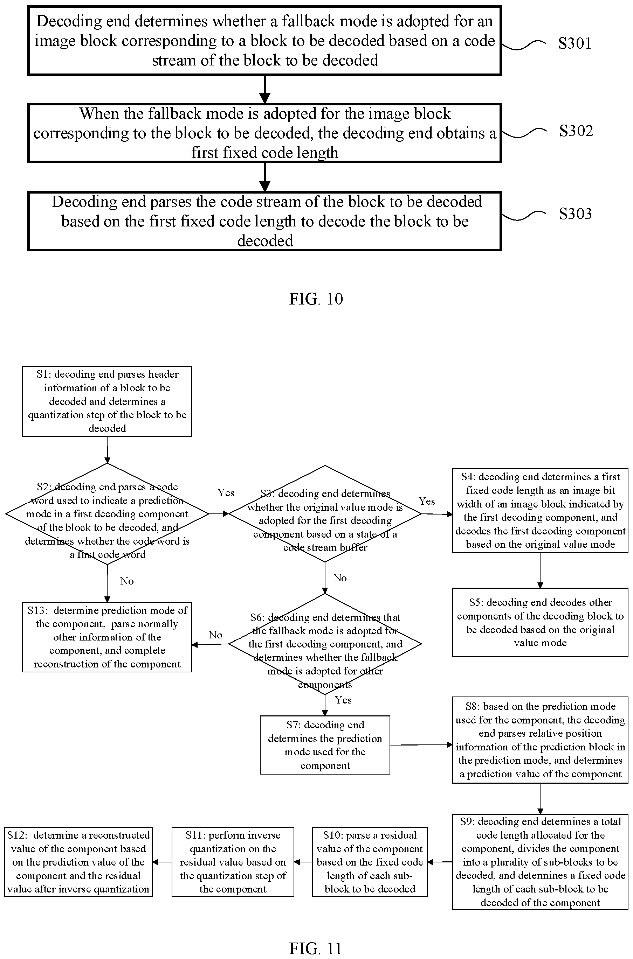

In some embodiments, the present disclosure also provides an image decoding method, which corresponds to the encoding method shown in FIG. 5. As shown in FIG. 10, FIG. 10 is a flowchart of an image decoding method provided in the present disclosure, which can be executed by the decoder 200 or by a decoding end (for example, the decoding end 20 shown in FIG. 1) that supports the function of the decoder 200. Taking the decoding method implemented by the decoder 200 as an example, the image decoding method includes steps S301 to S303.

In S301, the decoding end determines whether a fallback mode is adopted for an image block corresponding to a block to be decoded based on a code stream of the block to be decoded.

A code length obtained by encoding the image block based on the fallback mode is less than or equal to a maximum code length of the block to be decoded. The related explanation of the maximum code length can refer to the related description in step S101 above, which will not be repeated here.

In an example, based on the code stream of the block to be decoded, the decoding end can also parse complexity information of the block to be decoded from header information of the block to be decoded, and then determine a quantization step of the block to be decoded. Or, the decoding end can also parse the quantization step of the block to be decoded from the header information of the block to be decoded. Or, the decoding end can determine the quantization step of the block to be decoded based on target bits per pixel (BPP).

In some embodiments, the block to be decoded can include one or more components.

In an example, the block to be decoded can only include a luma component. Or, the block to be decoded can include three components, for example, luma Y, chroma Cb, and chroma Cr (or three components: red R, green G, and blue B, or three components: luma Y, chroma U, and chroma V). Or, on the basis of the above three components, the block to be decoded can also include an α component, which means that the block to be decoded can include four components in total. The α component is a pixel transparency component. When a value of the α component is 0, the pixel corresponding to the block to be decoded is transparent, and an image bit width of the α component is different from the other three components.

In some embodiments, if the block to be decoded includes a plurality of components, the plurality of components of the block to be decoded share the fallback mode (sharing the fallback mode refers to all the plurality of components adopting the fallback mode or not adopting the fallback mode), so that the decoding end can only determine whether the fallback mode is adopted for one component. In a case where one component of the plurality of components adopts the fallback mode, other components also adopt the fallback mode. Or, if a part of the plurality of components of the block to be decoded shares the fallback mode, the decoding end can only determine whether the fallback mode is adopted for one component of the part of the plurality of components, and whether the fallback mode is adopted for other components except this part. Or, the plurality of components of the block to be decoded do not share the fallback mode, and the decoding end can determine whether the fallback mode is adopted for each component respectively.

Specifically, the code stream of the block to be decoded can include an identifier for indicating the situation of the above sharing of the fallback mode. Therefore, the decoding end can determine components that share the fallback mode based on this identifier, and further determine whether each component adopts the fallback mode.

For example, in the case where the block to be decoded includes a first chroma component, a second chroma component, and a luma component, the decoding end can determine whether the fallback mode is adopted for the first chroma component, the second chroma component, and the luma component during encoding, respectively.

In an example, corresponding to Implementation 1 in step 103 above, when using Implementation 1 to determine whether to adopt the fallback mode for each component during encoding of the block to be decoded, the decoding end can parse the code stream of any one of the first chroma component, the second chroma component, or the luma component to determine whether the fallback mode is adopted for the first chroma component, the second chroma component, and the luma component during encoding.

Specifically, when the decoding end parses the code stream of any one of the first chroma component, the second chroma component, or the luma component and determines that the component is encoded in the fallback mode, the decoding end can determine that the first chroma component, the second chroma component, and the luma component are all encoded in the fallback mode, without the need to determine whether other components adopt the fallback mode based on code streams of other components.

In another example, corresponding to Implementation 2 in step 103 above, when using Implementation 2 to determine whether to adopt the fallback mode for each component during encoding of the block to be decoded, the decoding end can determine whether the fallback mode is adopted for the first chroma component and the second chroma component during encoding by parsing the code stream of the first chroma component or the second chroma component.

Specifically, when parsing the code stream of either the first chroma component or the second chroma component and determining that the component is encoded in the fallback mode, the decoding end can determine that both the first chroma component and the second chroma component are encoded in the fallback mode. In addition, the decoding end also needs to parse the code stream of the luma component and determine whether the luma component is encoded in the fallback mode.

In another example, corresponding to Implementation 3 in step 103 above, when using Implementation 3 to determine to adopt the fallback mode for each component during encoding of the block to be decoded, the decoding end parses code streams of the first chroma component, the second chroma component, and the luma component to determine whether the fallback mode is adopted for the first chroma component, the second chroma component, and the luma component during encoding, respectively.

In some embodiments, a code word of the sample mode and a code word of the fallback mode are the same. For example, if the code word of the sample mode and the code word of the fallback mode are both a first code word, when the decoding end parses the code stream of the block to be decoded and obtains the first code word, the decoding end can determine that the fallback mode or the sample mode is adopted for the block to be decoded.

Furthermore, the decoding end can determine whether the fallback mode is adopted the block to be decoded based on the size of the occupied memory space in the code stream buffer.

When the decoding end determines that the occupied memory space in the code stream buffer is greater than a first preset memory value when encoding the image block to be decoded, that is, it is determined that overflow occurs, the decoding end determines that the image block corresponding to the block to be decoded adopts the fallback mode. Otherwise, the decoding end determines that the image block corresponding to the block to be decoded adopts the sample mode.

The size of the first preset memory value can be determined based on an actual memory size of the code stream buffer, and there is no specific limitation.

In an example, if the decoding end determines that a code stream length of the block to be encoded is a sum of image bit widths of all components multiplied by the number of pixels, the decoding end can parse the code stream of the block to be decoded and reconstruct the image block corresponding to the block to be decoded based on the sample mode.

In some embodiments, before performing the following step S302, the decoding end may also determine a prediction mode that is used for the image block corresponding to the block to be decoded when the image block corresponding to the block to be decoded adopts the fallback mode. The prediction mode can be any prediction mode as described in step 102, or other possible prediction modes.

In one implementation, when the block to be decoded includes a component, the decoding end can parse the code stream of the block to be decoded to determine the prediction mode of the block to be decoded. Or, the decoding end can determine a preset prediction mode as the prediction mode of the block to be decoded. It should be understood that the preset prediction mode is the same as that used by the encoding end in the prediction process.

In another implementation, when the block to be decoded includes a plurality of components, a same prediction mode can be used for the plurality of components of the block. So that the decoding end can only determine the prediction mode of one component, which is the prediction mode of all components of the block to be decoded. Or, if a same prediction mode can be used for a part of the plurality of components of the block to be decoded, the decoding end can only determine the prediction mode of one component in the part, as well as prediction modes of other components except the part of the plurality of components. Or, the decoding end can determine the prediction mode for each component respectively.

The process of determining the prediction mode of a component by the decoding end can refer to the detailed description in the other Implementation mentioned above, and will not be repeated here.

In S302, when the fallback mode is adopted for the image block corresponding to the block to be decoded, the decoding end obtains a first fixed code length.

The first fixed code length is a code length of a sub-block to be decoded, and the sub-block to be decoded can include one or more sub-blocks to be decoded.

In an example, the first fixed code length can be a preset code length value or target BPP of the block to be decoded during encoding. The target BPP are used to indicate a code length required by the encoding end to encode each pixel point of the block to be encoded at a target compression rate.

In some embodiments, the decoding end can divide the block to be decoded into a plurality of sub-blocks to be decoded based on the code length of the block to be decoded and the first fixed code length.

The number of sub-blocks to be decoded can be determined according to the following formula (6):

The above fixed code length and the number of sub-blocks to be decoded in the block to be decoded satisfy the following formula (6):

number of sub-blocks to be decoded $\times$ first fixed code lenght = code lenght of the block to be decoded      formula (6):

Furthermore, the decoding end can divide the block to be decoded into a plurality of sub-blocks to be decoded based on the calculated number of sub-blocks to be decoded.

In some embodiments, the decoding end can divide the block to be decoded into the plurality of sub-blocks to be decoded based on a preset size.

The process of dividing the block to be decoded into the plurality of sub-blocks to be decoded by the decoding end can refer to the related description of step S201 above and will not be repeated.

In some embodiments, when the block to be decoded includes a plurality of components, the decoding end can first divide the block to be decoded into the plurality of components, and then divide each component into one or more sub-blocks to be decoded.

For example, the block to be decoded includes three components: the first chroma component, the second chroma component, and the luma component. The decoding end can divide the code length of the block to be decoded into three sub-code lengths based on a preset ratio, with one component corresponding to one sub-code length. Furthermore, based on the sub-code length of each component, each component can be divided into one or more sub-blocks to be decoded according to the above possible implementations.

In an example, for a block to be decoded in a YCoCg image, the preset ratio of of a Y component, a Co component, and a Cg component can be 2:1:1. For a block to be decoded in a YUV444 image, the preset ratio of a Y component: a U component: a V component can be 2:1:1. For a block to be decoded in a YUV422 image, the preset ratio of a Y component: a U component: a V component can be 2:1:1. For a block to be decoded in a YUV420 image, the preset ratio of a Y component: a U component: a V component can be 4:1:1. For a block to be decoded in a YUV400 image, only a luma component Y is included in the block to be decoded.

In an example, for a block to be decoded in an RGB image, the decoding end can divide the total code length of the block to be decoded into three sub-code lengths based on a 1:1:1 ratio of a R component: a G component: a B component, with one component corresponding to one sub-code length.

It should be noted that in the process of image encoding and decoding, for an image block in RGB format, since human eyes are more sensitive to image luma, in order to improve the image effect viewed by human eyes, the image block in RGB format is generally converted into an image block in YCoCg format before encoding. However, if the image block corresponding to the obtained block to be decoded is in RGB format, it indicates that the encoding end determines that the code length required for encoding the converted image block in YCoCg format is relatively long. Therefore, the decoding end can directly decode the code stream of each component of RGB to obtain the image block in RGB format.

Furthermore, the decoding end can determine the first fixed code length of each component based on the number of sub-blocks to be decoded in each component and the sub-code length. The specific process can refer to step S201 mentioned above, which will not be repeated here.

In other embodiments, when the block to be decoded includes a plurality of components, the decoding end can first divide the block to be decoded into one or more sub-decoding blocks, and for each sub-decoding block, further divide the sub-decoding block into sub-blocks of each component according to a ratio among each component.

In an example, based on the related description in step 103 above, the fallback mode can also be used in a case where the block to be encoded does not overflow. Correspondingly, in this case, the decoding end can determine that the code length value of the block to be decoded is other code length values greater than a target code length when the occupied memory in the code stream buffer is less than or equal to a first threshold of the total memory of the code stream buffer. For example, the first threshold can be 30% of the total memory of the code stream buffer. Therefore, the decoding end can determine that 1.5 times the target code length is the code length value of the block to be decoded. In an example, the decoding end can determine that the code length value of the block to be decoded is other code length values that are less than the target code length when the occupied memory in the code stream buffer is greater than or equal to a second threshold of the total memory of the code stream buffer. For example, the second threshold can be 85% of the total memory of the code stream buffer. Therefore, the decoding end can determine that 0.5 times the target code length is the code length value of the block to be decoded. The decoding end can also determine the target code length as the code length value of the block to be decoded when the occupied memory in the code stream buffer is less than the second threshold of the total memory of the code stream buffer and greater than the first threshold.

In an example, information on whether overflow occurs can be carried in the code stream of the block to be decoded, so that the decoding end can determine whether overflow occurs when encoding the image block based on the code stream of the block to be decoded.

In an example, the decoding end can determine the first fixed code length based on a quantization step of the block to be decoded, which is parsed based on header information of the block to be decoded, determined based on the target BPP, or determined through other similar manners.

In S303, the decoding end parses the code stream of the block to be decoded based on the first fixed code length to decode the block to be decoded.

In a possible implementation, the decoding end can obtain the first fixed code length and parse original pixel values of the image block corresponding to each sub-block to be decoded based on the first fixed code length.

In an example, in the case where the encoding end quantizes the original pixel values of the image block, the decoding end can perform inverse quantization on values parsed from the code stream based on the obtained quantization step.

In an example, if the encoding end transforms the original pixel values of the image block before quantization, the decoding end can further perform inverse transform on inverse quantized values after inverse quantizing the values parsed from the code stream.

In an example, the decoding end parses the code stream of the image block corresponding to the sub-block to be decoded to obtain a high-bit value of a reconstructed pixel value corresponding to the sub-block to be decoded, and then performs inverse quantization on the high-bit value of the reconstructed pixel value to obtain an inverse quantized high-bit value of the reconstructed pixel value, which is combined with a low-bit value of a prediction value to reconstruct the sub-block to be decoded.

The high-bit value of the reconstructed pixel value and the low-bit value of the prediction value can refer to the related description in step S202 above, which will not be repeated here.

In another example, the decoding end parses the code stream of the image block corresponding to the sub-block to be decoded to obtain a low-bit value of a reconstructed pixel value corresponding to the sub-block to be decoded, and then performs inverse quantization on the low-bit value of the reconstructed pixel value to obtain an inverse quantized low-bit value of the reconstructed pixel value, which is combined with a zero-padded value of a high-bit value of a prediction value to reconstruct the sub-block to be decoded.

The low-bit value of the reconstructed pixel value and the high-bit value of the prediction value can refer to the related description in step S202 above, which will not be repeated here.

In another possible implementation, the decoding end can obtain a fixed code length and parse a residual value of each sub-block to be decoded based on the fixed code length. And for any sub-block to be decoded, the prediction value of the sub-block to be decoded is obtained.

Furthermore, the image block corresponding to the block to be decoded is reconstructed based on the prediction value and the residual value of the sub-block to be decoded.

In an example, in a case where the encoding end quantizes residual values of the image block, the decoding end can perform inverse quantization on values parsed from the code stream based on an obtained quantization step.

In an example, if the encoding end transforms the original pixel values of the image block before quantization, the decoding end can further perform inverse transform on inverse quantized values after inverse quantizing the values parsed from the code stream.

In an example, for each sub-block to be decoded, if the coefficient value (for example, residual value, original value, etc.) of the sub-block to be decoded parsed based on the first fixed code length is on a boundary of a expressible range of the first fixed code length, the code stream of the sub-block to be decoded can also include a suffix in the transmission process to indicate the coefficient value of the sub-block to be decoded. For example, if the first fixed code length of the sub-block to be decoded is 3, since the range of coefficient values that can be represented by 3-bit binary data is [0, 7], if the code stream of the sub-block also includes a suffix 0, it can indicate that the current coefficient value is between [1, 8]. It should be understood that the suffix can be parsed according to preset suffix setting rules. Moreover, the preset suffix setting rules for the decoding end are the same as those for the encoding end.

Based on the above embodiments, when the encoding end adopts the fallback mode, the decoding end can adopt the fallback mode to decode the block to be decoded, which can avoid the overflow of the code stream. Thereby avoiding the loss of image information of the block to be decoded.

In some embodiments, the image decoding process provided by the present disclosure can also be specifically expressed as a logical flowchart as shown in FIG. 11. As shown in FIG. 11, the decoding process may include steps S1 to S12.

In S1, the decoding end parses header information of a block to be decoded and determines a quantization step of the block to be decoded.

In S2, the decoding end parses a code word used to indicate a prediction mode in a first decoding component of the block to be decoded, and determines whether the code word is a first code word.

The first decoding component is any one of a plurality of components of the block to be decoded. In addition, the code word used to indicate a sample mode is the same as the code word used to indicate a fallback mode, both are the first code word mentioned above. So when the decoding end parses the code stream of the block to be decoded and obtains the first code word, the decoding end can determine that the fallback mode or the sample mode is adopted for the block to be decoded.

When determining that the code word used to indicate the prediction mode in the first decoding component is the first code word, the decoding end performs the following step S3.

Otherwise, when determining that the code word used to indicate the prediction mode in the first decoding component is not the first code word, the decoding end performs the following step S13.

In S3, the decoding end determines whether the sample mode is adopted for the first decoding component based on a state of a code stream buffer.

Referring to the related description in step S301 above, the decoding end can determine whether the fallback mode or the sample mode is adopted for the block to be decoded based on a size of the occupied memory space in the code stream buffer. The specific process will not be repeated.

When determining that the sample mode is adopted for the first decoding component, the decoding end performs the following step S4.

Otherwise, when determining that the sample mode is not adopted for the first decoding component, the decoding end performs the following step S6.

In S4, the decoding end determines a first fixed code length as an image bit width of an image block indicated by the first decoding component, and decodes the first decoding component based on the sample mode.

The process of determining the first fixed code length refers to the above step S302, and is not repeated here.

In S5, the decoding end decodes other components of the decoding block to be decoded based on the sample mode.

In S6, the decoding end determines that the fallback mode is adopted for the first decoding component, and continues to determine whether the fallback mode is adopted for other components.

For any component for which the fallback mode is adopted, the decoding end performs step S7.

For any component for which the fallback mode is not adopted, the decoding end decodes the component by performing the following step S13.

In S7, the decoding end determines the prediction mode used for the component.

Prediction modes used for respective components of the block to be decoded can be the same or different, and the specific process can refer to the related description in step S301 above, which will not be repeated here.

In S8, based on the prediction mode used for the component, the decoding end parses relative position information of the prediction block in the prediction mode, and determines a prediction value of the component.

In S9, the decoding end determines a total code length allocated for the component, divides the component into a plurality of sub-blocks to be decoded, and determines a fixed code length of each sub-block to be decoded of the component.

The decoding end can determine the fixed code length of each sub-block to be decoded based on the quantization step of the block to be decoded. Or, the decoding end can parse the code stream of each sub-block to be decoded, and then determine the fixed code length of each sub-block to be decoded.

In S10, a residual value of the component is parsed based on the fixed code length of each sub-block to be decoded.

In S11, inverse quantization is performed on the residual value based on the quantization step of the component.

In S12, a reconstructed value of the component is determined based on the prediction value of the component and the residual value after inverse quantization.

In S13, the prediction mode of the component is determined, other information of the component is parsed normally, and reconstruction of the component is completed.

The decoding end can refer to the decoding process of steps 31 to 36 mentioned above when performing step S13, and will not be repeated here.

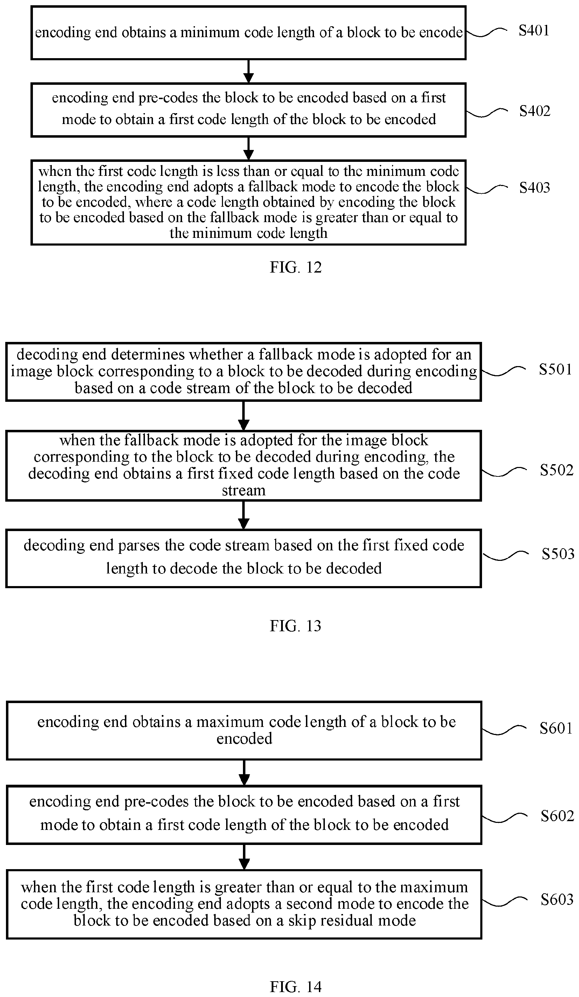

In some embodiments, the present disclosure also provides an image encoding method, as shown in FIG. 12. The image encoding method can be performed by the encoder 100 or by an encoding end (for example, the encoding end 10 shown in FIG. 1) that supports the function of the encoder 100. Here, taking the encoding method being implemented by the encoding end as an example for explanation. The image encoding method includes steps S401 to S403.

In S401, the encoding end obtains a minimum code length of a block to be encoded.

The minimum code length is a minimum code stream length currently allowed to be cached in a storage space used by the encoding end to cache an encoded code stream.

The block to be encoded can be referred to as an encoding unit. Usually, when encoding image frames in a video to be encoded, the encoding end encodes them in units of encoding units.

In addition, the minimum code length is used to indicate a minimum code length that can be encoded for the block to be encoded. It should be understood that in order to prevent the occurrence of code stream underflow, the minimum code length can be determined by a size of a storage space of an encoding buffer.

In an example, a difference between a length of the code stream stored in the storage space and a code length output by the storage space per unit time, plus the minimum code length, is greater than or equal to the code length output by the storage space per unit time.

It should be noted that when receiving the code stream of the current block encoded by the encoder, the code stream buffer also outputs a certain amount of code stream. If the code stream in the current code stream buffer is empty, or if the length of the code stream in the current stream buffer is less than the length of the code length flowing out of the buffer in a unit time, the code stream will "underflow", which will cause the code stream to not be transmitted normally. The minimum code length can be a code length that ensures the normal transmission of the code stream in the code stream buffer.

In S402, the encoding end pre-codes the block to be encoded based on a first mode to obtain a first code length of the block to be encoded.

The first mode can be one of a plurality of prediction modes at the encoding end, and the first code length is a length of a code stream obtained after encoding the block to be encoded.

The specific description of step S402 can refer to the related description in step 102 mentioned above, which will not be repeated here.

In S403, when the first code length is less than or equal to the minimum code length, the encoding end adopts a fallback mode to encode the block to be encoded, where a code length obtained by encoding the block to be encoded based on the fallback mode is greater than or equal to the minimum code length.

The specific description of step S403 can refer to the related description in step 103 mentioned above, which will not be repeated here.

The image encoding method provided in the embodiment of the present disclosure has at least the following beneficial effects: the method can first pre-code the block to be encoded, compare the length of the code stream obtained based on pre-coding with the minimum code length allowed to be occupied by the block to be encoded, and determine whether the code stream will underflow according to the comparison result. Furthermore, when it is determined that there may be code stream underflow, the fallback mode is adopted to encode the block to be encoded to ensure the normal transmission of the code stream in the code stream buffer.

In some embodiments, the present disclosure also provides an image decoding method corresponding to the encoding method shown in FIG. 12, as shown in FIG. 13. The image decoding method can be performed by the decoder 200 or by a decoding end (for example, the decoding end 20 shown in FIG. 1) that supports the function of the decoder 200.

In S501, the decoding end determines whether a fallback mode is adopted for an image block corresponding to a block to be decoded during encoding based on a code stream of the block to be decoded.

A code length obtained by encoding the image block based on the fallback mode is greater than or equal to a minimum code length of the block to be decoded. The minimum code length is a minimum code stream length allowed to be cached in a storage space used to cache an encoded code stream when encoding the image block corresponding to the block to be decoded.

The specific implementation of step S501 can refer to the related description of step S301 mentioned above, which will not be repeated here.

In S502, when the fallback mode is adopted for the image block corresponding to the block to be decoded during encoding, the decoding end obtains a first fixed code length based on the code stream.

The first fixed code length is a code length of a sub-block to be decoded, and the block to be decoded includes a plurality of sub-blocks to be decoded.

The specific implementation of step S502 can refer to the related description of step S302 mentioned above, which will not be repeated here.

In S503, the decoding end parses the code stream based on the first fixed code length to decode the block to be decoded.

The specific implementation of step S503 can refer to the related description of step S303 mentioned above, which will not be repeated here.

In some embodiments, the present disclosure also provides an image encoding method, as shown in FIG. 14. The image encoding method can be performed by the encoder 100 or by an encoding end (for example, the encoding end 10 shown in FIG. 1) that supports the function of the encoder 100. Here, taking the encoding method being implemented by the encoding end as an example for explanation. The image encoding method includes steps S601 to S603.

In S601, the encoding end obtains a maximum code length of a block to be encoded.

The maximum code length is a maximum code stream length currently allowed to be cached in a storage space used by the encoding end to cache an encoded code stream.

The specific implementation of step S601 can refer to the related description of step S101 mentioned above, which will not be repeated here.

In S602, the encoding end pre-codes the block to be encoded based on a first mode to obtain a first code length of the block to be encoded.

The first mode is one of a plurality of prediction modes at the encoding end, and the first code length is a length of a code stream obtained after encoding the block to be encoded.

The specific implementation of step S602 can refer to the related description of step 102 mentioned above, which will not be repeated here.

In S603, when the first code length is greater than or equal to the maximum code length, the encoding end adopts a second mode to encode the block to be encoded based on a skip residual mode.

A code length obtained by adopting the second mode to encode the block to be encoded based on the skip residual mode is less than or equal to the maximum code length. The second mode can be one of a plurality of prediction modes at the encoding end.

Moreover, in the skip residual mode, there is no need to encode (decode) residual coefficients. In this case, residual values of pixels in the current image block are regarded as 0, meaning that a reconstructed value of each pixel is equal to a prediction value of the pixel. Thus, the encoding end only needs to encode information indicating the second mode. For example, an identifier of the second mode is encoded to obtain a code stream of the block to be encoded with the identifier of the second mode.

It should be noted that for pixel points with large residual values, the skip residual mode will cause significant distortion in the encoding and decoding process. Therefore, in practical situations, when residual values are large, the encoding end will not select the skip residual mode. However, in a case where the first code length is greater than or equal to the maximum code length, in order to avoid overflow of the code stream, regardless of the size of the residual values, the encoding end adopts the skip residual mode, that is, forcibly skip a residual encoding mode.

In an example, the second mode can be a target mode. The target mode can be an optimal prediction mode. At this time, encoding the block to be encoded based on the target mode can maintain a good coding performance.

In another possible implementation, the second mode can be the same as the first mode. In an example, the second mode can also be a preset prediction mode.

It can be understood that the encoding end can preset a prediction mode based on the skip residual mode with a good coding performance as the second mode. When the first code length is greater than or equal to the maximum code length, no matter what the optimal prediction mode is, the preset second mode is adopted to encode the block to be encoded.

In an example, based on the skip residual mode, the encoding end can adopt various prediction modes such as a point prediction mode, an intra prediction mode, an intra block copy mode, and a sample mode to encode the block to be encoded, so as to determine the optimal prediction mode based on the skip residual mode.

It can be understood that, based on this encoding method, the overflow of code stream can be avoided when adopting the skip residual mode for encoding.

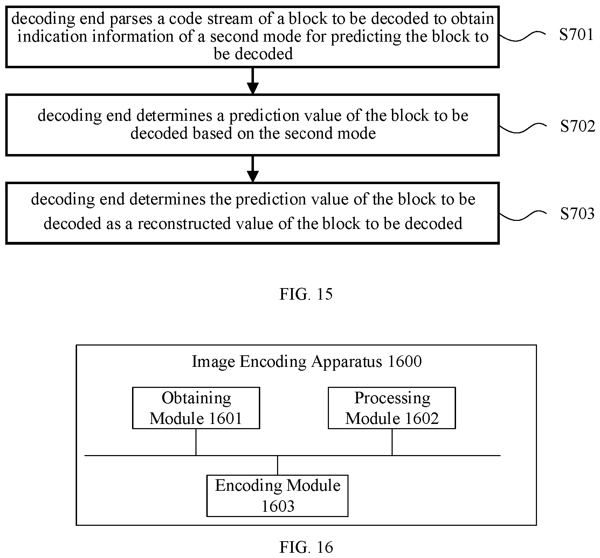

In some embodiments, the present disclosure also provides an image decoding method corresponding to the encoding method shown in FIG. 14, as shown in FIG. 15. The image decoding method can be performed by the decoder 200 or by a decoding end (for example, the decoding end 20 shown in FIG. 1) that supports the function of the decoder 200. Here, taking the decoding method being implemented by the decoder 200 as an example for explanation. The image decoding method includes steps S701 to S703.

In S701, the decoding end parses a code stream of a block to be decoded to obtain indication information of a second mode for predicting the block to be decoded.

The second mode can be any one of a plurality of prediction modes, and reference can be made to the description of the second mode in the above image encoding method. The indication information of the second mode can be an identifier of the second mode.

In S702, the decoding end determines a prediction value of the block to be decoded based on the second mode.

The specific process of the decoding end to determine the prediction value of the block to be decoded can be determined based on the second mode.

For example, if the second mode is a vertical mean prediction mode, the decoding end can use reconstructed values of pixels above and below a pixel to be predicted to obtain a predicted value of the pixel to be predicted, will not list them one by one here.

In S703, the decoding end determines the prediction value of the block to be decoded as a reconstructed value of the block to be decoded.

In some embodiments, the present disclosure also provides another way to determine a prediction value of an image block, which will be described as below.

The encoding end can first obtain reconstructed pixel points around the block to be encoded, including the following possible cases.

Case 1: the encoding end cannot obtain reconstructed pixel points in a previous row of the block to be encoded, and cannot obtain reconstructed pixel points in a previous column of the block to be encoded.

In this case, the encoding end can determine the prediction value of the block to be encoded based on prediction modes in Huffman Table 1. The prediction modes in Huffman Table 1 include the point prediction mode, the sample mode, and the fallback mode. It should be understood that when the reconstructed pixel points in the previous row of the block to be encoded cannot be obtained and the reconstructed pixel points in the previous column of the block to be encoded cannot be obtained, the encoding end can determine the prediction value of the block to be encoded based on the point prediction mode, the sample mode, or the fallback mode.

Huffman coding is an entropy coding (weight coding) algorithm used for lossless data compression. Huffman table is a code table that generates code words based on probability. If the encoding end provides n prediction modes, Huffman table can generate an encoded code word corresponding to each prediction mode for the n prediction modes based on a selection probability of each prediction mode in the n prediction modes. Furthermore, the prediction mode with a higher selection probability has a shorter code word. The prediction mode with a smaller selection probability has a longer code word. So that an average code rate after encoding can be small. It should be understood that Huffman Table 1 includes a data symbol before encoding for the point prediction mode, the sample mode or the fallback mode, and the encoded code word corresponding to each mode.

Case 2: the encoding end can obtain the reconstructed pixel points in the previous row of the block to be encoded, but cannot obtain the reconstructed pixel points in the previous column of the block to be encoded.

The encoding end can take the reconstructed pixel points in the previous row as reference pixels and determine the prediction value of the block to be encoded based on prediction modes in Huffman Table 2. The prediction modes in Huffman Table 2 include a point prediction mode, a sample mode, a fallback mode, and other intra prediction modes in which the previous row can be used as reference pixels, as well as an encoded code word corresponding to each mode.

Case 3: the encoding end can obtain the reconstructed pixel points in the previous column of the block to be encoded, but cannot obtain the reconstructed pixel points in the previous row of the block to be encoded.

The encoding end can take the reconstructed pixel points in the previous column as reference pixels and determine the prediction value of the block to be encoded based on prediction modes in Huffman Table 3. The prediction modes in Huffman Table 3 include a point prediction mode, a block prediction mode, a fallback mode, and other intra prediction modes in which the previous column are used as reference pixels, as well as an encoded code word corresponding to each mode.

Case 4: the encoding end can obtain the reconstructed pixel points in the previous column of the block to be encoded and the reconstructed pixel points in the previous row of the block to be encoded.

The encoding end can take the reconstructed pixel points in the previous column and/or the reconstructed pixel points in the previous row as reference pixels, and determine the prediction value of the block to be encoded based on prediction modes in Huffman Table 4. The prediction modes in Huffman Table 4 can include all possible prediction modes. The listing and explanation of the prediction modes can refer to the related description in step 102 above, and will not be repeated.

Correspondingly, when determining the prediction value of the block to be decoded, the decoding end can first obtain reconstructed pixel points around the block to be decoded, and there are also four possible cases corresponding to those at the encoding end mentioned above.

Specifically, in the case corresponding to case 1, when the decoding end cannot obtain the reconstructed pixel points in the previous row of the block to be decoded, and cannot obtain the reconstructed pixel points in the previous column of the block to be decoded, the decoding end can look up Huffman Table 1 based on the code word for indicating the prediction mode in the block to be decoded, determine the prediction mode, and further determine the prediction value of the block to be decoded. In the case corresponding to case 2, when the decoding end can obtain the reconstructed pixel points in the previous row of the block to be decoded, and cannot obtain the reconstructed pixel points in the previous column of the block to be decoded, the decoding end can look up Huffman Table 2 based on the code word for indicating the prediction mode in the block to be decoded, determine the prediction mode, and further determine the prediction value of the block to be decoded. In the case corresponding to case 3, when the decoding end can obtain the reconstructed pixel points in the previous column of the block to be decoded, and cannot obtain the reconstructed pixel points in the previous row of the block to be decoded, the decoding end can look up Huffman table 3 based on the code word for indicating the prediction mode in the block to be decoded, determine the prediction mode, and further determine the prediction value of the block to be decoded. In the case corresponding to case 4, when the decoding end can obtain the reconstructed pixel points in the previous column of the block to be encoded and the reconstructed pixel points in the previous row of the block to be encoded, the decoding end can look up Huffman table 4 based on the code word for indicating the prediction mode in the block to be decoded, determine the prediction mode, and further determine the prediction value of the block to be decoded.

In some embodiments, a semi-fixed length encoding manner is also provided when encoding the sub-block to be encoded in the above embodiments. Under the premise of no conflict, the methods provided in the above embodiments can also adopt the semi-fixed length encoding manner.

The semi-fixed length encoding manner means that for one or more sub-blocks to be coded of the block to be coded, the encoding end can respectively encode the sub-blocks to be coded based on different code lengths. For a sub-block to be encoded that includes a plurality of pixel points, the encoding can encode each pixel point with a fixed code length, and deploy encoded code words with the fixed code length in a code stream prefix of the sub-block to be encoded.

Correspondingly, the decoding end can parse the prefix of each sub-block to be decoded, and parse the fixed code length of each sub-block to be decoded. For a sub-block to be decoded, the decoding end can decode each pixel point based on the parsed fixed code length of the sub-block to be decoded.

The encoding apparatus and the decoding apparatus provided by the embodiments of the present disclosure will be described as below.

In an example, any decoding apparatus provided in the embodiments of the present disclosure can be the decoding end 20 or the decoder 200 in FIG. 1. In another example, any of the encoding apparatuses provided below can be the encoding end 10 or the encoder 100 in FIG. 1. It is explained here and will not be described in detail below.

FIG. 16 is a schematic structural diagram of an image encoding apparatus 1600 provided in the present disclosure, and any of the above encoding method embodiments can be executed by the encoding apparatus 1600. The image encoding apparatus 1600 includes an obtaining module 1601, a processing module 1602, and an encoding module 1603. The obtaining module 1601 is configured to obtain a maximum code length of a block to be encoded, where the maximum code length is a maximum code stream length currently allowed to be cached in the storage space used by the encoding end to cache the encoded code stream. The processing module 1602 is configured to pre-code the block to be encoded based on a first mode to obtain a first code length of the block to be encoded, where the first mode is one of a plurality of prediction modes at an encoding end, and the first code length is a length of a code stream obtained after encoding the block to be encoded. The encoding module 1603 is configured to adopt a fallback mode to encode the block to be encoded in response to the first code length being greater than or equal to the maximum code length, where a code length obtained by encoding the block to be encoded based on the fallback mode is less than or equal to the maximum code length.

For more detailed descriptions of the obtaining module 1601, the processing module 1602, and the encoding module 1603 mentioned above, as well as more detailed descriptions of each technical feature and beneficial effects, please refer to the corresponding method embodiments mentioned above, which will not be repeated here.

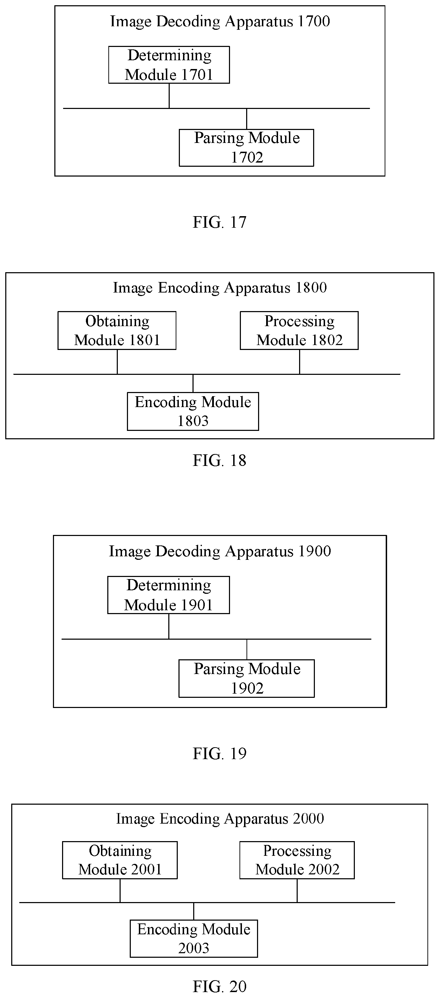

FIG. 17 is a schematic structural diagram of an image decoding apparatus 1700 provided in the present disclosure, and any of the above decoding method embodiments can be executed by the decoding apparatus 1700. The image decoding apparatus 1700 includes a determining module 1701 and a parsing module 1702. The determining module 1701 is configured to determine whether a fallback mode is adopted for an image block corresponding to a block to be decoded based on a code stream of the block to be decoded. The determining module 1701 is further configured to obtain a first fixed code length in response to the fallback mode being adopted for the image block corresponding to the block to be decoded. The parsing module 1702 is configured to parse the code stream of the block to be decoded based on the first fixed code length to decode the block to be decoded.

For more detailed descriptions of the determining module 1701 and the parsing module 1702 mentioned above, as well as more detailed descriptions of each technical feature and beneficial effects, please refer to the corresponding method embodiments mentioned above, which will not be repeated here.

FIG. 18 is a schematic structural diagram of an image encoding apparatus 1800 provided in the present disclosure, and any of the above encoding method embodiments can be executed by the encoding apparatus 1800. The image encoding apparatus 1800 includes an obtaining module 1801, a processing module 1802, and an encoding module 1803. The obtaining module 1801 is configured to obtain a minimum code length of a block to be encoded, where the minimum code length is a minimum code stream length currently allowed to be cached in a storage space used by the encoding end to cache an encoded code stream. The processing module 1802 is configured to pre-code the block to be encoded based on a first mode to obtain a first code length of the block to be encoded, where the first mode is one of a plurality of prediction modes at an encoding end, and the first code length is a length of a code stream obtained after encoding the block to be encoded. The encoding module 1803 is configured to adopt a fallback mode to encode the block to be encoded in response to the first code length being less than or equal to the minimum code length, where a code length obtained by encoding the block to be encoded based on the fallback mode is greater than or equal to the minimum code length.

For more detailed descriptions of the obtaining module 1801, the processing module 1802, and the encoding module 1803 mentioned above, as well as more detailed descriptions of each technical feature and beneficial effects, please refer to the corresponding method embodiments mentioned above, which will not be repeated here.

FIG. 19 is a schematic structural diagram of an image decoding apparatus 1900 provided in the present disclosure, and any of the above decoding method embodiments can be executed by the decoding apparatus 1900. The image decoding module 1900 includes a determining module 1901 and a parsing module 1902. The determining module 1901 is configured to determine whether a fallback mode is adopted for an image block corresponding to a block to be decoded during encoding based on a code stream of the block to be decoded, where a code length obtained by encoding the image block based on the fallback mode is greater than or equal to a minimum code length of the block to be decoded, where the minimum code length is a minimum code stream length allowed to be cached in a storage space for caching an encoded code stream when an image block to be encoded is encoded. The determining module 1901 is further configured to obtain a first fixed code length based on the code stream in response to the fallback mode being adopted for the image block corresponding to the block to be decoded during encoding, where the first fixed code length is a code length of a sub-block to be decoded, and the block to be decoded includes one or more sub-blocks to be decoded. The parsing module 1902 is configured to parse the code stream of the block to be decoded based on the first fixed code length to decode the block to be decoded.

For a more detailed description of the determining module 1901 and the parsing module 1902 mentioned above, as well as a more detailed description of each technical feature and beneficial effects, please refer to the corresponding method embodiments mentioned above, which will not be repeated here.

FIG. 20 is a schematic structural diagram of an image encoding apparatus 2000 provided in the present disclosure, and any of the above encoding method embodiments can be executed by the encoding apparatus 2000. The image encoding apparatus 2000 includes an obtaining module 2001, a processing module 2002, and an encoding module 2003. The obtaining module 2001 is configured to obtain a maximum code length of a block to be encoded, where the maximum code length is a maximum code stream length currently allowed to be cached in the storage space used by the encoding end to cache the encoded code stream. The processing module 2002 is configured to pre-code the block to be encoded based on a first mode to obtain a first code length of the block to be encoded, where the first mode is one of a plurality of prediction modes at the encoding end, and the first code length is a length of a code stream obtained after encoding the block to be encoded. The encoding module 2003 is configured to adopt a second mode to encode the block to be encoded based on a skip residual mode in response to the first code length being greater than or equal to the maximum code length, where a code length obtained by adopting the second mode to encode the block to be encoded based on the skip residual mode is less than or equal to the maximum code length, and the second mode is one of the plurality of prediction modes at the encoding end.

For more detailed descriptions of the obtaining module 2001, the processing module 2002, and the encoding module 2003 mentioned above, as well as more detailed descriptions of each technical feature and beneficial effects, please refer to the corresponding method embodiments mentioned above, which will not be repeated here.

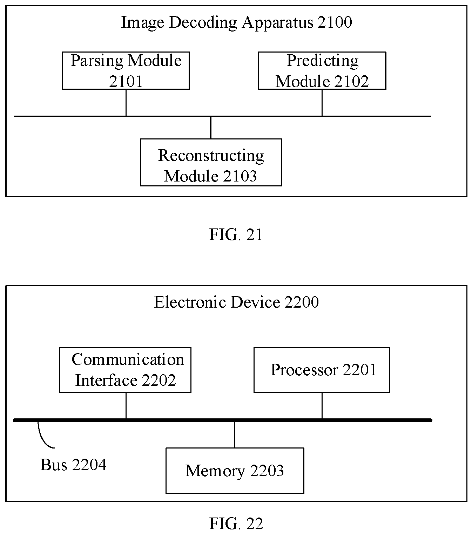

FIG. 21 is a schematic structural diagram of an image decoding apparatus 2100 provided in the present disclosure, and any of the above decoding method embodiments can be executed by the decoding apparatus 2100. The image decoding apparatus 2100 includes a parsing module 2101, a predicting module 2102, and a reconstructing module 2103. The parsing module 2101 is configured to parse a code stream of a block to be decoded to obtain an identifier of a second mode for predicting the block to be decoded. The predicting module 2102 is configured to determine a prediction value of the block to be decoded based on the second mode. The reconstructing module 2103 is configured to determine the prediction value of the block to be decoded as a reconstructed value of the block to be decoded.

For more detailed descriptions of the parsing module 2101, the predicting module 2102, and the reconstructing module 2103 mentioned above, as well as more detailed descriptions of each technical feature and beneficial effects, please refer to the corresponding method embodiments mentioned above, which will not be repeated here.

The present disclosure also provides an electronic device 2200 for implementing any of the above image encoding/decoding methods. As shown in FIG. 22, which is a schematic structural diagram of an electronic device 2200 provided in the present disclosure, the electronic device 2200 includes a processor 2201 and a communication interface 2202. The processor 2201 and the communication interface 2202 are coupled to each other. It can be understood that the communication interface 2202 can be a transceiver or an input-output interface.

In an example, the electronic device 2200 can also include a memory 2203 for storing instructions executed by the processor 2201 or input data required for the processor 2201 to execute the instructions, or data generated by processor 2201 after executing the instructions.

The specific connection medium among the communication interface 2202, the processor 2201, and the memory 2203 is not limited in the embodiments of the present disclosure. In the embodiment of the present disclosure, the communication interface 2202, the processor 2201, and the memory 2203 are connected by a bus 2204 in FIG. 22, and the bus 2204 is indicated by a thick line in FIG. 22. The connection manner between other components is only for schematic illustration, and is not limited to this. The bus may include an address bus, a data bus, a control bus, and the like. To simplify the representation, only one thick line is used in FIG. 22, but it does not mean that there is only one bus or one type of bus.

The memory 2203 may be used to store software programs and modules, such as program instructions/modules corresponding to the image decoding methods or the image encoding methods provided by the embodiments of the present disclosure, and the processor 2201 performs various functional applications as well as data processing by executing the software programs and modules stored in the memory 2203, so as to implement any of the image decoding methods or the image encoding methods provided above. The communication interface 2202 can be used for signaling or data communication with other devices. The electronic device 2200 in the present disclosure may have a plurality of communication interfaces 2202.

It will be understood that the processor in the embodiment of the present disclosure can be a central processing unit (CPU), a neural processing unit (NPU) or a graphic processing unit (GPU). The processor can also be other general-purpose processor, a digital signal processor (DSP), an application specific integrated circuits (ASIC), a field programmable gate array (FPGA) or other programmable logic devices, transistor logic devices, hardware components or any combination thereof. The general-purpose processor may be a microprocessor or any conventional processor.

The method steps in the embodiments of the present disclosure may be realized by means of hardware or by means of a processor executing software instructions. The software instructions may include corresponding software modules, which may be stored in a random access memory (RAM), a flash memory, a read-only memory (ROM), a programmable ROM (PROM), an erasable PROM (EPROM), an electrically EPROM (EEPROM), a register, a hard disk, a removable hard disk, CD-ROM, or any other form of storage media known in the art. An exemplary storage medium is coupled to a processor so that the processor can read information from and write information to the storage medium. Of course, the storage medium may also be an integral part of the processor. The processor and the storage medium may be located in an application specific integrated circuit (ASIC). In addition, the ASIC can be located in a network device or a terminal device. Of course, the processor and the storage medium may also be present as discrete components in the network device or the terminal device.

The embodiments of the present disclosure also provide an encoding and decoding system, including an encoding end and a decoding end. The encoding end can be used to execute any of the image encoding methods provided above, and the decoding end can be used to execute the corresponding image decoding method.

In the above examples, it can be implemented in whole or in part by software, hardware, firmware, or any combination thereof. When implemented in software, it can be implemented in whole or in part in the form of a computer program product. The computer program product includes one or more computer programs or instructions. When computer programs or instructions are loaded and executed on a computer, the processes or function according to the examples of the present disclosure are executed in whole or in part. The computer may be a general-purpose computer, a specialized computer, a computer network, a network device, a user device, or other programmable device. The computer programs or instructions can be stored in a computer-readable storage medium or transmitted from one computer-readable storage medium to another computer-readable storage medium, for example, the computer programs or instructions can be transmitted from a website site, a computer, a server or a data center via wire or wireless means to another website, a computer, a server, or a data center. The computer-readable storage medium can be any available medium that can be accessed by a computer or a data storage device such as a server or a data center that integrates one or more available media. The available medium may be a magnetic medium (e.g., a floppy disk, a hard disk, a magnetic tape), an optical medium (e.g., a digital video disc (DVD)), or a semiconductor medium (e.g., a solid state drive (SSD)).

In various embodiments of the present disclosure, if there is no special explanation and logical conflict, the terms and/or descriptions between different embodiments are consistent and can be quoted from each other, and the technical features in different embodiments can be combined to form a new embodiment according to their inherent logical relationship.

It will be understood that various numerical numbers involved in the embodiments of the present disclosure are only for the convenience of description and are not used to limit the scope of the embodiments of the present disclosure. Sizes of serial numbers in the above each process do not mean an implementation sequence, and the implementation sequence of each process should be determined by its functions and internal logic.

**Claims**

1. An image decoding method, applied to a decoding end, the method comprising:

    determining whether a fallback mode is adopted for an image block corresponding to a block to be decoded based on a code stream of the block to be decoded, wherein a code length of the block to be decoded is less than or equal to a maximum code length of the block to be decoded, wherein the maximum code length is a maximum code stream length allowed to be cached in a code stream buffer;
    in response to the fallback mode being adopted for the image block corresponding to the block to be decoded, obtaining a first fixed code length, wherein the first fixed code length is a code length of a sub-block to be decoded, and the block to be decoded comprises one or more sub-blocks to be decoded; and

parsing the code stream based on the first fixed code length to decode the block to be decoded.

2. The method according to claim 1, wherein the block to be decoded comprises one or more components, and the decoding end respectively determines whether the fallback mode is adopted for the one or more components.

3. The method according to claim 1, wherein the block to be decoded comprises a first chroma component, a second chroma component, and a luma component, wherein determining whether the fallback mode is adopted for the image block corresponding to the block to be decoded during encoding based on the code stream of the block to be decoded comprises:

parsing a code stream of any one of the first chroma component, the second chroma component, or the luma component, and determining whether the fallback mode is adopted for the first chroma component, the second chroma component, and the luma component.

4. The method according to claim 3, wherein a sum of a code length of the first chroma component, a code length of the second chroma component, and a code length of the luma component is the code length of the block to be decoded; and the code length of the luma component is greater than the code length of the first chroma component or the code length of the second chroma component.

5. The method according to any one of claims 1 to 4, wherein the first fixed code length is a preset code length value or target bits per pixel (BPP) of the block to be decoded, wherein the target BPP are configured to indicate a code length required for decoding each pixel point of the block to be decoded at a target compression rate.

6. The method according to claim 5, wherein parsing the code stream based on the first fixed code length to decode the block to be decoded comprises:

dividing the block to be decoded into a plurality of sub-blocks to be decoded based on the code length of the block to be decoded and the first fixed code length; and
parsing a code stream of each of the plurality of sub-blocks to be decoded of the block to be decoded based on the first fixed code length to decode the block to be decoded.

7. The method according to any one of claims 1 to 6, wherein parsing the code stream based on the first fixed code length to decode the block to be decoded comprises:

parsing a code stream of each of the one or more sub-blocks to be decoded of the block to be decoded based on the first fixed code length to obtain a residual value of each of the one or more sub-blocks to be decoded; and
reconstructing each of the one or more sub-blocks to be decoded based on a prediction value and the residual value of each of the one or more sub-blocks to be decoded to obtain a reconstructed block of each of the one or more sub-blocks to be decoded.

8. The method according to any one of claims 1 to 6, further comprising:
if a code word configured to indicate a prediction mode in the code stream of the block to be decoded is a first code word, and the fallback mode is not adopted for the image block corresponding to the block to be decoded, reconstructing the image block corresponding to the block to be decoded based on a sample mode, wherein the first code word is configured to indicate the fallback mode or the sample mode.

9. An image encoding method, applied to an encoding end, the method comprising:

obtaining a maximum code length of a block to be encoded, wherein the maximum code length is a maximum code stream length allowed to be cached in a code stream buffer;
pre-coding the block to be encoded based on a first mode to obtain a first code length of the block to be encoded, wherein the first mode is one of a plurality of prediction modes at the encoding end, and the first code length is a length of a code stream obtained after encoding the block to be encoded; and
in response to the first code length being greater than or equal to the maximum code length, adopting a fallback mode to encode the block to be encoded, wherein a code length obtained by encoding the block to be encoded based on the fallback mode is less than or equal to the maximum code length.

10. The method according to claim 9, wherein the block to be encoded comprises a first chroma component, a second chroma component, and a luma component, and in response to the first code length being greater than or equal to the maximum code length, adopting the fallback mode to encode the block to be encoded comprises:

in response to the first code length being greater than or equal to the maximum code length, based on the maximum code length, determining a code length of each of the first chroma component, the second chroma component, and the luma component according to a preset ratio, wherein a sum of a maximum code length of the first chroma component, a maximum code length of the second chroma component, and a maximum code length of the luma component is the maximum code length or a code length of the code stream buffer flowing out in a unit time; and

determining whether to adopt the fallback mode to encode the first chroma component, the second chroma component, and the luma component based on one or more of the maximum code length of the first chroma component, the maximum code length of the second chroma component, and the maximum code length of the luma component.

11. An image decoding method, applied to a decoding end, the method comprising:

determining whether a fallback mode is adopted for an image block corresponding to a block to be decoded during encoding based on a code stream of the block to be decoded, wherein a code length obtained by encoding the image block based on the fallback mode is greater than or equal to a minimum code length of the block to be decoded, wherein the minimum code length is a minimum code stream length allowed to be cached in a code stream buffer;

in response to the fallback mode being adopted for the image block corresponding to the block to be decoded during encoding, obtaining a first fixed code length based on the code stream, wherein the first fixed code length is a code length of a sub-block to be decoded, and the block to be decoded comprises one or more sub-blocks to be decoded; and

parsing the code stream based on the first fixed code length to decode the block to be decoded.

12. An image encoding method, applied to an encoding end, the method comprising:

obtaining a minimum code length of a block to be encoded, wherein the minimum code length is a minimum code stream length allowed to be cached in a code stream buffer;

pre-coding the block to be encoded based on a first mode to obtain a first code length of the block to be encoded, wherein the first mode is one of a plurality of prediction modes at the encoding end, and the first code length is a length of a code stream obtained after encoding the block to be encoded; and

in response to the first code length being less than or equal to the minimum code length, adopting a fallback mode to encode the block to be encoded, wherein a code length obtained by encoding the block to be encoded based on the fallback mode is greater than or equal to the minimum code length.

13. An image decoding apparatus, comprising:

a determining module, configured to determine whether a fallback mode is adopted for an image block corresponding to a block to be decoded during encoding based on a code stream of the block to be decoded, wherein a code length obtained by encoding the image block based on the fallback mode is less than or equal to a maximum code length of the block to be decoded, wherein the maximum code length is a maximum code stream length allowed to be cached in a code stream buffer;

wherein the determining module is further configured to obtain a first fixed code length based on the code stream in response to the fallback mode being adopted for the image block corresponding to the block to be decoded during encoding, wherein the first fixed code length is a code length of a sub-block to be decoded, and the block to be decoded comprises one or more sub-blocks to be decoded; and

a parsing module, configured to parse the code stream based on the first fixed code length to decode the block to be decoded.

14. An image encoding apparatus, comprising:

an obtaining module, configured to obtain a maximum code length of a block to be encoded, wherein the maximum code length is a maximum code stream length allowed to be cached in a code stream buffer;

a processing module, configured to pre-code the block to be encoded based on a first mode to obtain a first code length of the block to be encoded, wherein the first mode is one of a plurality of prediction modes at an encoding end, and the first code length is a length of a code stream obtained after encoding the block to be encoded; and

an encoding module, configured to adopt a fallback mode to encode the block to be encoded in response to the first code length being greater than or equal to the maximum code length, wherein a code length obtained by encoding the block to be encoded based on the fallback mode is less than or equal to the maximum code length.

15. An image decoding apparatus, comprising:

a determining module, configured to determine whether a fallback mode is adopted for an image block corresponding to a block to be decoded during encoding based on a code stream of the block to be decoded, wherein a code length obtained by encoding the image block based on the fallback mode is greater than or equal to a minimum code length of the block to be decoded, wherein the minimum code length is a minimum code stream length allowed to be cached in a code stream buffer;

wherein the determining module is further configured to obtain a first fixed code length based on the code stream in response to the fallback mode being adopted for the image block corresponding to the block to be decoded during encoding, wherein the first fixed code length is a code length of a sub-block to be decoded, and the block to be decoded comprises one or more sub-blocks to be decoded; and

a parsing module, configured to parse the code stream based on the first fixed code length to decode the block to be decoded.

16. An image encoding apparatus, comprising:

an obtaining module, configured to obtain a minimum code length of a block to be encoded, wherein the minimum code length is a minimum code stream length allowed to be cached in a code stream buffer;

a processing module, configured to pre-code the block to be encoded based on a first mode to obtain a first code length of the block to be encoded, wherein the first mode is one of a plurality of prediction modes at an encoding end, and the first code length is a length of a code stream obtained after encoding the block to be encoded; and

an encoding module, configured to adopt a fallback mode to encode the block to be encoded in response to the first code length being less than or equal to the minimum code length, wherein a code length obtained by encoding the block to be encoded based on the fallback mode is greater than or equal to the minimum code length.

17. An electronic device, comprising one or more processors and a memory, wherein the memory is configured to store computer instructions, and the one or more processors are configured to call the computer instructions from the memory and run the computer instructions to implement the method according to any one of claims 1 to 10.

18. A computer-readable storage medium storing a computer program or instructions, wherein when the computer program or instructions are executed by an electronic device, the method according to any one of claims 1 to 10 is implemented.

19. An electronic device, comprising one or more processors and a memory, wherein the memory is configured to store computer instructions, and the one or more processors are configured to call the computer instructions from the memory and run the computer instructions to implement the method according to claim 11 or 12.

20. A computer-readable storage medium storing a computer program or instructions, wherein when the computer program or instructions are executed by an electronic device, the method according to claim 11 or 12 is implemented.

Encoding And
Decoding System 1

FIG. 1

Encoder 100

FIG. 2

Encoding
Unit          Independent
              Encoding Unit

Parallel
Encoding
Unit 2

Parallel
Encoding Unit 1

FIG. 3

Decoder 200

quantized residual coefficients

encoded bit stream

**Code Stream
Parsing Unit 201**

decoded
encoding
parameters

reconstructed
image

**Inverse
Quantization
Unit 202**

inverse quantized
residual coefficients

**Prediction
Processing Unit
204**

predication block

**Residual Inverse
Transform Unit
203**

reconstructed
image

reconstructed
block

**Filter Unit 206**

+

reconstructed residual
values

Reconstruction
Unit 205

FIG. 4

Encoding end obtains a maximum code length of a block to be encoded | S101

Encoding end pre-codes the block to be encoded based on a first mode to obtain a first code length of the block to be encoded | S102

When the first code length is greater than or equal to the maximum code length, the encoding end encodes the block to be encoded in a fallback mode, where a code length obtained by encoding the block to be encoded based on the fallback mode is less than or equal to the maximum code length | S103

FIG. 5

| A | B |
|---|---|
| C | D |

| $A_{rec} \Rightarrow$ | B |
|---|---|
| C | D |

| $A_{rec}$ | $B_{rec}$ |
|---|---|
| C | D |

| $A_{rec}$ | $B_{rec}$ |
|---|---|
| $C_{rec} \Rightarrow$ | D |

reconstructed pixel

FIG. 6

Encoding end divides the block to be encoded into one or more sub-blocks to be encoded — S201

Based on the first fixed code length, the encoding end adopts the fixed code length encoding manner to encode a plurality of sub-blocks to be encoded — S202

FIG. 7

| A1 | A2 | A3 | A4 | A5 | A6 | A7 | A8 | A9 | A10 | A11 | A12 | A13 | A14 | A15 | A16 |
|----|----|----|----|----|----|----|----|----|-----|-----|-----|-----|-----|-----|-----|
| B1 | B2 | B3 | B4 | B5 | B6 | B7 | B8 | B9 | B10 | B11 | B12 | B13 | B14 | B15 | B16 |

FIG. 8

| C0 | C1 | C2 | C3 | C4 | C5 | C6 | C7 | C8 | C9 | C10 | C11 | C12 | C13 | C14 | C15 | C16 |
|----|----|----|----|----|----|----|----|----|----|-----|-----|-----|-----|-----|-----|-----|
| A0 | A1 | A2 | A3 | A4 | A5 | A6 | A7 | A8 | A9 | A10 | A11 | A12 | A13 | A14 | A15 | A16 |
| B0 | B1 | B2 | B3 | B4 | B5 | B6 | B7 | B8 | B9 | B10 | B11 | B12 | B13 | B14 | B15 | B16 |

reconstructed pixel

(a)

| C0 | A0 | A0 | A0 | A0 | A0 | A0 | A0 | A0 | A0 | A0 | A0 | A0 | A0 | A0 | A0 | A0 |
|----|----|----|----|----|----|----|----|----|----|----|----|----|----|----|----|----|
| A0 | A1 | A2 | A3 | A4 | A5 | A6 | A7 | A8 | A9 | A10 | A11 | A12 | A13 | A14 | A15 | A16 |
| B0 | B1 | B2 | B3 | B4 | B5 | B6 | B7 | B8 | B9 | B10 | B11 | B12 | B13 | B14 | B15 | B16 |

reconstructed pixel

filled pixel

(b)

| C0 | B0 | B0 | B0 | B0 | B0 | B0 | B0 | B0 | B0 | B0 | B0 | B0 | B0 | B0 | B0 | B0 |
|----|----|----|----|----|----|----|----|----|----|----|----|----|----|----|----|----|
| A0 | A1 | A2 | A3 | A4 | A5 | A6 | A7 | A8 | A9 | A10 | A11 | A12 | A13 | A14 | A15 | A16 |
| B0 | B1 | B2 | B3 | B4 | B5 | B6 | B7 | B8 | B9 | B10 | B11 | B12 | B13 | B14 | B15 | B16 |

reconstructed pixel

filled pixel

(c)

| C0 | A0 | B0 | A0 | B0 | A0 | B0 | A0 | B0 | A0 | B0 | A0 | B0 | A0 | B0 | A0 | B0 |
|----|----|----|----|----|----|----|----|----|----|----|----|----|----|----|----|----|
| A0 | A1 | A2 | A3 | A4 | A5 | A6 | A7 | A8 | A9 | A10 | A11 | A12 | A13 | A14 | A15 | A16 |
| B0 | B1 | B2 | B3 | B4 | B5 | B6 | B7 | B8 | B9 | B10 | B11 | B12 | B13 | B14 | B15 | B16 |

reconstructed pixel

filled pixel

(d)

FIG. 9

Decoding end determines whether a fallback mode is adopted for an image block corresponding to a block to be decoded based on a code stream of the block to be decoded ⟶ S301

When the fallback mode is adopted for the image block corresponding to the block to be decoded, the decoding end obtains a first fixed code length ⟶ S302

Decoding end parses the code stream of the block to be decoded based on the first fixed code length to decode the block to be decoded ⟶ S303

FIG. 10

S1: decoding end parses header information of a block to be decoded and determines a quantization step of the block to be decoded

S2: decoding end parses a code word used to indicate a prediction mode in a first decoding component of the block to be decoded, and determines whether the code word is a first code word

S3: decoding end determines whether the original value mode is adopted for the first decoding component based on a state of a code stream buffer

Yes

S4: decoding end determines a first fixed code length as an image bit width of an image block indicated by the first decoding component, and decodes the first decoding component based on the original value mode

Yes

No

No

S13: determine prediction mode of the component, parse normally other information of the component, and complete reconstruction of the component

No

S6: decoding end determines that the fallback mode is adopted for the first decoding component, and determines whether the fallback mode is adopted for other components

S5: decoding end decodes other components of the decoding block to be decoded based on the original value mode

Yes

S7: decoding end determines the prediction mode used for the component

S8: based on the prediction mode used for the component, the decoding end parses relative position information of the prediction block in the prediction mode, and determines a prediction value of the component

S12: determine a reconstructed value of the component based on the prediction value of the component and the residual value after inverse quantization

S11: perform inverse quantization on the residual value based on the quantization step of the component

S10: parse a residual value of the component based on the fixed code length of each sub-block to be decoded

S9: decoding end determines a total code length allocated for the component, divides the component into a plurality of sub-blocks to be decoded, and determines a fixed code length of each sub-block to be decoded of the component

FIG. 11

| encoding end obtains a minimum code length of a block to be encode | S401 |

↓

| encoding end pre-codes the block to be encoded based on a first mode to obtain a first code length of the block to be encoded | S402 |

↓

| when the first code length is less than or equal to the minimum code length, the encoding end adopts a fallback mode to encode the block to be encoded, where a code length obtained by encoding the block to be encoded based on the fallback mode is greater than or equal to the minimum code length | S403 |

FIG. 12

| decoding end determines whether a fallback mode is adopted for an image block corresponding to a block to be decoded during encoding based on a code stream of the block to be decoded | S501 |

↓

| when the fallback mode is adopted for the image block corresponding to the block to be decoded during encoding, the decoding end obtains a first fixed code length based on the code stream | S502 |

↓

| decoding end parses the code stream based on the first fixed code length to decode the block to be decoded | S503 |

FIG. 13

| encoding end obtains a maximum code length of a block to be encoded | S601 |

↓

| encoding end pre-codes the block to be encoded based on a first mode to obtain a first code length of the block to be encoded | S602 |

↓

| when the first code length is greater than or equal to the maximum code length, the encoding end adopts a second mode to encode the block to be encoded based on a skip residual mode | S603 |

FIG. 14

decoding end parses a code stream of a block to be decoded to obtain indication information of a second mode for predicting the block to be decoded ⌇ S701

decoding end determines a prediction value of the block to be decoded based on the second mode ⌇ S702

decoding end determines the prediction value of the block to be decoded as a reconstructed value of the block to be decoded ⌇ S703

FIG. 15

Image Encoding Apparatus 1600

Obtaining Module 1601

Processing Module 1602

Encoding Module 1603

FIG. 16

Image Decoding Apparatus 1700

Determining
Module 1701

Parsing Module
1702

FIG. 17

Image Encoding Apparatus 1800

Obtaining
Module 1801

Processing
Module 1802

Encoding Module
1803

FIG. 18

Image Decoding Apparatus 1900

Determining
Module 1901

Parsing Module
1902

FIG. 19

Image Encoding Apparatus 2000

Obtaining
Module 2001

Processing
Module 2002

Encoding Module
2003

FIG. 20

Image Decoding Apparatus 2100

| Parsing Module 2101 | Predicting Module 2102 |

Reconstructing Module 2103

FIG. 21

Electronic Device 2200

| Communication Interface 2202 | Processor 2201 |

Bus 2204

Memory 2203

FIG. 22

## INTERNATIONAL SEARCH REPORT

| International application No. |
|---|
| **PCT/CN2023/098534** |

### A. CLASSIFICATION OF SUBJECT MATTER

H04N19/146(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT: 编码, 压缩, 变长, 外溢, 大于, 超过, 超出, 缓冲, 缓存, 码长, 码流, 长度, 最大, 最长, 最小, 块, 小于, encode, code, compress, variable length, over flow, overflow, block, code length, code stream, length, bigger, greater, smaller, buffer, cach, maximum, minimum

### C. DOCUMENTS CONSIDERED TO BE RELEVANT

| Category* | Citation of document, with indication, where appropriate, of the relevant passages | Relevant to claim No. |
|---|---|---|
| PX | CN 116074516 A (HANGZHOU HIKVISION DIGITAL TECHNOLOGY CO., LTD.) 05 May 2023 (2023-05-05)<br>claims 1-6, 11-16, 19-22, and 25-26 | 1-20 |
| A | CN 109245852 A (HUAWEI TECHNOLOGIES CO., LTD.) 18 January 2019 (2019-01-18)<br>entire document | 1-20 |
| A | US 2021203949 A1 (CANON K. K.) 01 July 2021 (2021-07-01)<br>entire document | 1-20 |
| A | JP 2019114868 A (CANON K. K.) 11 July 2019 (2019-07-11)<br>entire document | 1-20 |
| A | US 2002006162 A1 (MITSUBISHI ELECTRIC CORP.) 17 January 2002 (2002-01-17)<br>entire document | 1-20 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 August 2023** | **04 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/098534**

| Patent document cited in search report | | | Publication date (day/month/year) | Patent family member(s) | | | Publication date (day/month/year) |
|---|---|---|---|---|---|---|---|
| CN | 116074516 | A | 05 May 2023 | None | | | |
| CN | 109245852 | A | 18 January 2019 | None | | | |
| US | 2021203949 | A1 | 01 July 2021 | JP | 2021103875 | A | 15 July 2021 |
| | | | | US | 11336896 | B2 | 17 May 2022 |
| JP | 2019114868 | A | 11 July 2019 | JP | 6985924 | B2 | 22 December 2021 |
| US | 2002006162 | A1 | 17 January 2002 | US | 6795503 | B2 | 21 September 2004 |
| | | | | EP | 1162849 | A2 | 12 December 2001 |
| | | | | EP | 1162849 | A3 | 17 December 2003 |
| | | | | EP | 1162849 | B1 | 05 June 2013 |
| | | | | JP | 2001346215 | A | 14 December 2001 |
| | | | | JP | 3662171 | B2 | 22 June 2005 |

Form PCT/ISA/210 (patent family annex) (July 2022)